Europäisches Patentamt

(19) European Patent Office

Office européen des brevets

(11) **EP 0 531 293 B1**

(12) **EUROPÄISCHE PATENTSCHRIFT**

(45) Veröffentlichungstag und Bekanntmachung des Hinweises auf die Patenterteilung:
**14.02.1996 Patentblatt 1996/07**

(21) Anmeldenummer: **91903722.6**

(22) Anmeldetag: **04.02.1991**

(51) Int. Cl.$^6$: **B01D 1/14**, B01D 3/00

(86) Internationale Anmeldenummer: **PCT/DE91/00095**

(87) Internationale Veröffentlichungsnummer: **WO 91/11237 (08.08.1991 Gazette 1991/18)**

(54) **THERMISCHE PROZESSE DES AUSDAMPFENS, KONDENSIERENS UND ABSORBIERENS UND IHRE KOMBINATIONEN**

THERMAL PROCESSES FOR EVAPORATING, CONDENSING AND ABSORBING AND COMBINATION OF SAID PROCESSES

PROCEDE THERMIQUE D'EVAPORATION, DE CONDENSATION ET D'ABSORPTION, AVEC COMBINAISON DE CES PROCESSUS

(84) Benannte Vertragsstaaten:
**AT BE CH DE DK ES FR GB GR IT LI LU NL SE**

(30) Priorität: **02.02.1990 DE 4003120**
**30.10.1990 DE 4034547**

(43) Veröffentlichungstag der Anmeldung:
**17.03.1993 Patentblatt 1993/11**

(73) Patentinhaber: **Vinz, Peter, Dr.-Ing.**
**D-82467 Garmisch-Partenkirchen (DE)**

(72) Erfinder: **Vinz, Peter, Dr.-Ing.**
**D-82467 Garmisch-Partenkirchen (DE)**

(56) Entgegenhaltungen:
**WO-A- /06054**         **DE-C- 494 108**
**DE-C- 675 538**        **GB-A- 2 142 549**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft thermische Verfahren zur abwärmefreien Trennung nicht absorptiv und absorptiv wirkender Flüssigkeitsgemische sowie Verfahren zur abwärmefreien thermischen Energiewandlung und Wärmetransformation.

Erfahrungsgemäß können erwärmte Flüssigkeiten und auch Flüssigkeitsgemische unterhalb ihrer Siedetemperatur in einen untersättigten Neutralgasstrom hinein verdampfen, indem sich der ausdampfende Flüssigkeitsstrom abkühlt und der Dampfgehalt eines mit Dampf gesättigten Neutralgasstromes auskondensiert oder in einem Lösungsmittel absorptiv verflüssigt werden, indem der mit Dampf gesättigte Neutralgasstrom gekühlt wird oder der Partialdampfdruck im absorptiv wirkenden Lösungsmittel geringer gehalten wird als in dem mit Dampf gesättigten Neutralgasstrom.

Technisch genutzt werden die physikalischen Vorgänge bei der Trocknung von Feststoffen, bei der Aufkonzentrierung bzw. Entfeuchtung von Lösungen, bei der destillativen Trennung von Flüssigkeitsgemischen mit unterschiedlichen Dampfdrucken der beteiligten Gemischkomponenten und bei der absorptiven Kältegewinnung.

Aufklären lassen sich die theoretischen Hintergründe zu diesen physikalischen Vorgängen mit Bilanzierungen nach dem Gibbs-Helmholtz-Gesetz unter Verwendung von Bezugssystem-zugeordneten Phasengleichgewichtszustandsgrößen der an den Vorgängen beteiligten Komponenten.

Die kondensative Entfeuchtung eines gesättigten Neutralgas-Dampfgemischstromes über ein Sättigungstemperaturintervall ist entweder mittels Direktkondensation in einem Strom der Flüssigphase der Dampfkomponente oder mittels Wärmeentzug durch ein externes Kühlmittel möglich. Voraussetzung hierfür ist, daß der Sättigungspartialdampfdruck im wärmeaufnehmenden Fluidstrom geringer ist als im gesättigter Neutralgas-Dampfgemischstrom.

Die Gleichgewichtsbedingungen für den kondensativen Phasenwechsel der flüchtigen Komponente lauten:

$$H_D - H_F = \Delta H_K$$

$$G_D - G_F = \Delta G_K$$

$$T \times s_D - T \times s_F = T \times \Delta s_K$$

$$\Delta H_K = T \times \Delta s_K + \Delta G_K$$

Da beim kondensativen Phasenwechsel der reinen Dampfkomponente die Gibb'sche freie Enthalpie G unverändert bleibt, ergibt sich $\Delta H_K = T \times \Delta s_K$.

Die kondensative Verflüssigung eines Dampfes über ein Temperaturintervall folgt der Kondensationskennlinie $\Delta G = 0$, und die Triebenergie über ein Sättigungstemperaturintervall entlang der $\Delta G = 0$ Kennlinie ergibt sich aus dem örtlichen Sättigungstemperaturunterschied zwischen der zu verflüssigenden Dampfkomponente im Neutralgasstrom und dem wärmeaufnehmenden Fluidstrom. Wärmeverschleppungen über das Neutralgas sind jedoch bei den Umlaufmengen der Fluidströme zu berücksichtigen.

Die absorptive Entfeuchtung eines gesättigten Neutralgas-Dampfgemischstromes ist dagegen eine alleinige Funktion des örtlichen Partialdruckes der im Lösungsmittel gelösten "flüchtigen" Komponente. Solange dieser Partialdruck geringer ist als der ortsgleiche Partialdampfdruck im Neutralgas-Dampfgemischstrom wird Dampf im Lösungsmittel absorptiv verflüssigt und damit der Dampfgehalt im Neutralgasstrom reduziert.

Ein bedeutsamer Unterschied zwischen der absorptiven und der kondensativen Verflüssigung ist nun darin begründet, daß auf absorptivem Wege ein überhitzter Dampf mit einem weitaus geringeren Sättigungsdruck als dem kondensativen Sättigungsdruck bei Kühltemperaturen oberhalb der Umgebungstemperatur verflüssigt werden kann.

Oder fragt man, bei welchen Sättigungstemperaturen sich der zu verflüssigende Dampf bilden konnte, so ist dies ohne zusätzliche Maßnahmen bei der kondensativen Verflüssigung nur bei Sättigungstemperaturen oberhalb der Umgebungstemperatur möglich, während er sich bei der absorptiven Verflüssigung generell bei Sättigungstemperaturen weit unterhalb der Umgebungstemperatur bilden kann. Hieraus resultieren die kältetechnischen Anwendungen des kombinierten Ausdampf-Absorptionsprozesses.

Die Gleichgewichtsbedingungen für den absorptiven Phasenwechsel der flüchtigen Komponente lauten:

$$H_{LM} + H_D - H_L = \Delta H_A$$

$$T_{LM} \times s_{LM} + T_D \times s_D - T_L \times s_L = T \times \Delta s_A$$

$$G_{LM} + G_D - G_L = \Delta G_A$$

$$\Delta H_A = \Delta (T \times s (T))_A + \Delta G_A$$

Die einzelnen Energieströme werden multiplikativ aus den spezifischen Gleichgewichtszustandsgrößen und den spezifischen Mengenströmen des Lösungsmittels (LM), der flüchtigen Dampfkomponente (D) und der Lösung (L) gebildet.

Die spezifischen Mengenströme (m) ergeben sich wiederum aus den Konzentrationen (X) der am Absorptionsvorgang beteiligten Gemischkomponenten (LM, D und L) zu

$$m_L = \frac{X_D - X_{LM}}{X_L - X_{LM}} \cdot m_D , \ m_{LM} = m_L - 1 , \ m_D = 1$$

Der Einfluß des Neutralgases beschränkt sich auf Wärmeverschleppungen vom Absorptionsprozeß in den Ausdampfprozeß. Sie lassen sich mit konstruktiven Gegenmaßnahmen weitgehend ausschließen.

Die absorptive Dampfverflüssigung über ein Konzentrationsintervall einer sich anreichernden Lösungsmittelkomponente ist nun auf zwei Wegen möglich, entweder isobar ohne Neutralgaszirkulation oder zunächst angenommen isotherm mit Neutralgaszirkulation.

Im isobaren Fall kann ein Dampf, welcher im Verdampfer bei konstantem Sättigungsdruck gebildet wird, bei dem gleichen Sättigungsdruck aber nur unter steter Abnahme der Sättigungstemperatur der sich anreichernden Lösungsmittelkomponente absorptiv verflüssigt werden.

Im isothermen Fall kann dagegen ein Dampf, welcher in einem Verdampfer mit ansteigendem Sättigungspartialdampfdruck gebildet wird unter steter Zunahme des Sättigungspartialdampfdruckes in der absorbierenden Lösungsmittelkomponente isotherm verflüssigt werden.

Am Beispiel des Flüssigkeitsgemisches NH3-H2O wurden beide absorptiven Verflüssigungsprozesse und auch ihre Prozeßumkehrungen mit Bilanzierung nach dem Gibbs-Helmholtz-Gesetz analysiert und zwar für eine gleiche Konzentrationsänderung im Lösungslauf.

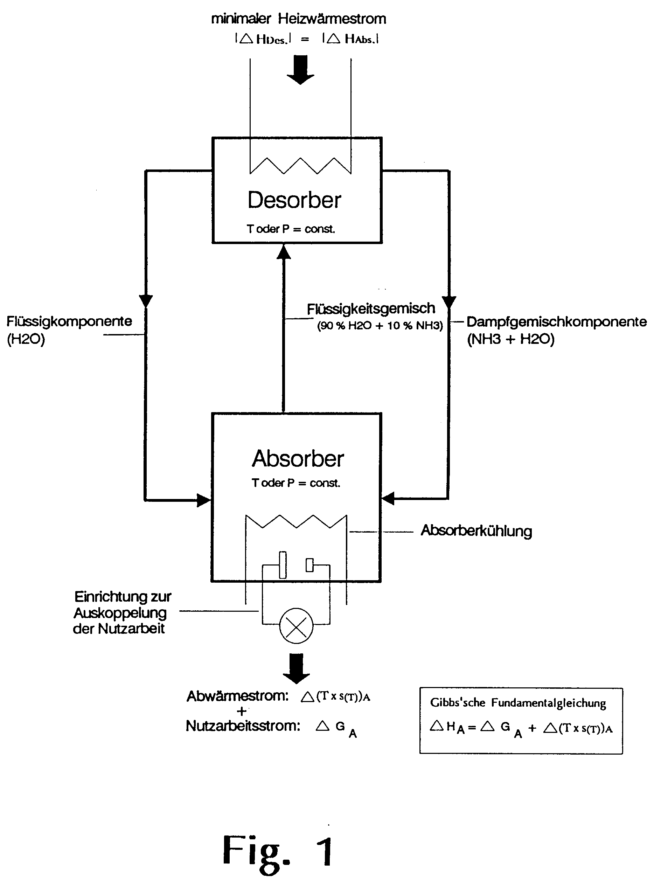

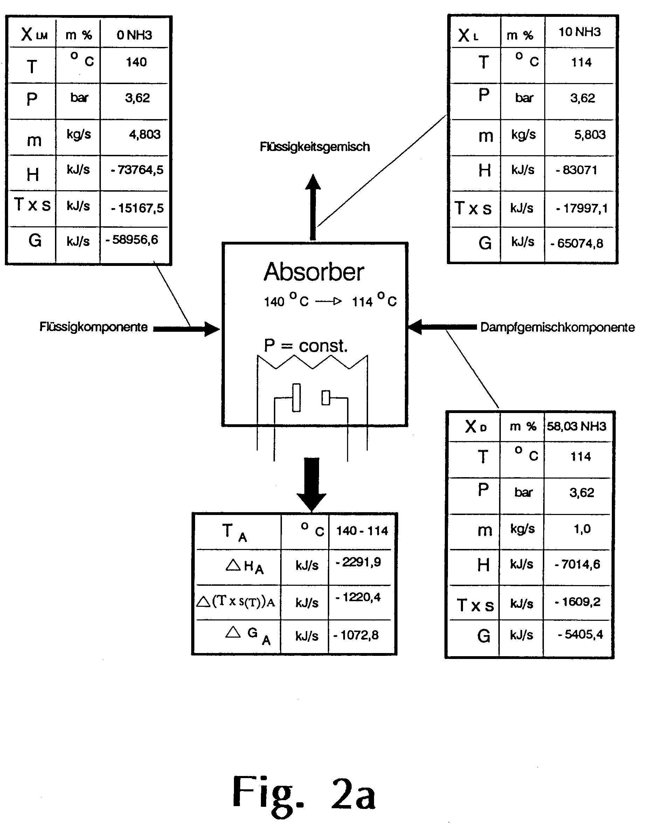

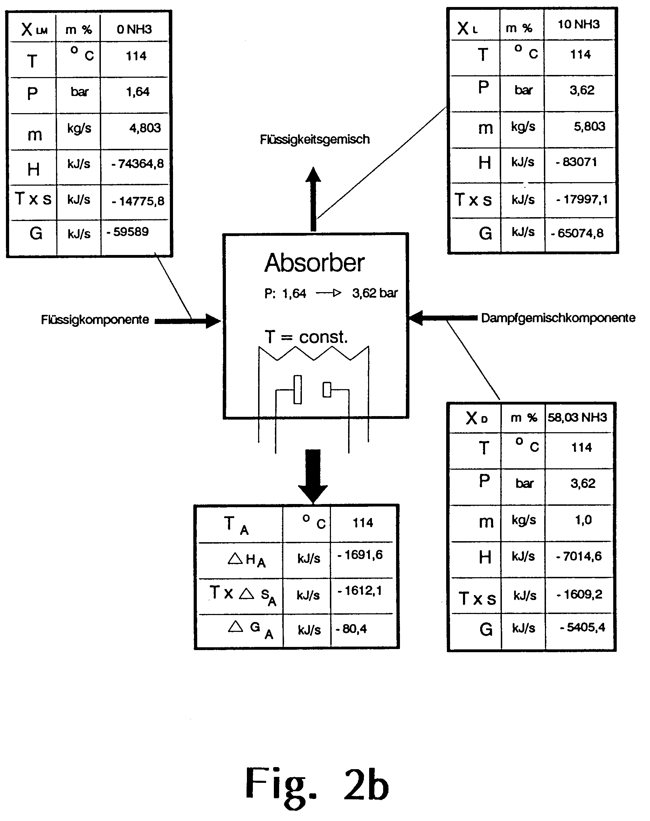

Hierbei ergeben sich gravierende Unterschiede in den einzelnen beim absorptiven Verflüssigungsprozeß abzuführenden Energiebeträgen (siehe Fig. 1 und Fig. 2). Zunächst ist auffallend, daß $\Delta$GA in beiden Fällen nicht zu Null wird, d.h. beim isobaren und auch beim isothermen absorptiven Verflüssigungsprozeß entsteht neben entropiebehafteter Energie entropiefreie Nutzarbeit.

Eine bedeutungsvolle neue Erkenntnis hierzu ist jedoch, daß der beim absorptiven Verflüssigungsprozeß freiwerdende Nutzarbeitsbetrag bei der Prozeßumkehrung, d.h. bei der destillativen Zerlegung des absorptiv wirkenden Gemisches in seine Ausgangskomponenten auch nur als betragsgleicher Heizwärmeanteil neben dem für die Verdampfung der flüchtigen Komponente erforderlichen Heizwärmeanteil zugeführt werden muß. Diese neue Erkenntnis gilt für sämtliche absorptiv wirkenden Flüssigkeitsgemische.

Der Temperatursprung des absorptiven Verflüssigungsprozesses von der Sättigungstemperatur der flüchtigen Komponente zur Sättigungstemperatur der absorbierenden Lösungsmittelkomponente resultiert somit aus der Aufzehrung von entropiefreier Nutzarbeit, die bei der thermischen Gemischtrennung als Heizwärme zugeführt werden mußte.

Bei der Gemischtrennung muß jedoch als zusätzlicher Heizwärmebetrag nur der bei der absorptiven Gemischbildung nicht aufgezehrte Nutzarbeitsbetrag aufgebracht werden. Folglich muß die Nutzarbeit aus der Verdampfungswärme der dampfförmig ausgetriebenen Komponente resultieren.

Wenn nun, wie die Analysen zeigen, die Energiebeträge bei der isothermen absorptiven Verflüssigung geringer sind als bei der isobaren absorptiven Verflüssigung, so ist das darauf zurückzuführen, daß die Prozeßeckwerte trotz gleicher Konzentrationsänderung verschieden sind.

Nahezu gleichwertige $\Delta$H-Beträge ergeben sich jedoch, wenn die endangereicherte Lösung bei der isobaren Verflüssigung als Zweitkühlmittel neben dem externen Kühlmittel Verflüssigungsabwärme aufnimmt und so im Idealfall bis auf die Lösungsmitteleintrittstemperatur aufgeheizt werden kann. Die Ziel muß es daher sein, bei der absorptiven Verflüssigung einen $\Delta$G-Überschuß zu vermeiden, da dieser Betrag als Zusatzheizwärme bei der Gemischtrennung anfällt.

Während sich die Maßnahmen bei der isobaren Gemischbildung auf die zuvor genannte rekuperative Lösungsrückerwärmung beschränken, kann mit Hilfe der Neutralgasatmosphäre der Absorptionsprozeß nicht nur isotherm, sondern mit ansteigender Sättigungstemperatur bei gleichzeitig ansteigender Lösungskonzentration ausgeführt werden.

Dieser Sättigungstemperaturanstieg folgt dann einer Absorptionskennlinie $\Delta$G = 0, und damit kann während des absorptiven Verflüssigungsprozesses Verflüssigungsabwärme in der sich anreichernden Lösung gespeichert werden. Diese Speicherung würde eine deutliche Reduzierung des thermischen Trennaufwands bewirken. Sie setzt aber voraus, daß die Lösungsmittelkomponente stets mit einer geringeren Temperatur in den Absorber eintritt als die angereicherte Lösung den Absorber verläßt. Das gelingt mit der bisher bekannten Trenntechnik nicht.

Andererseits geht aus den Bilanzierungen hervor, daß der maximal mögliche Temperatursprung nur möglich ist, wenn die Dampfkomponente vor der absorptiven Verflüssigung bis auf die Temperatur des Verflüssigungsprozesses aufgeheizt wird. Hierzu ist ein Gaswärmetauscher zwischen dem Verdampfer und dem Absorber vorzusehen, der nicht nur vom dampfbeladenen Neutralgas-Dampfgemischstrom und dem dampfentladenen Neutralgasstrom beaufschlagt wird, sondern auch von einem Teilstrom des dem Verdampfer erwärmt zugeleiteten Kondensatstroms.

Mit einer zusätzlichen Überhitzung der dampfbeladenen Neutralgas-Dampfgemischströme läßt sich der Sättigungstemperaturanstieg ebenfalls einer $\Delta$G = 0 Kennlinie folgend mit gleichzeitig zunehmender Lösungskonzentration steiler ausführen.

Dieser steilere Sättigungstemperaturanstieg bei der Lösungsanreicherung ist jedoch auch dann gegeben, wenn die Absorption in diskreten Konzentrationsintervallen isotherm gestuft abläuft und die Lösung zwischen den einzelnen Stufen mit Verflüssigungsabwärme der temperaturmäßig übergeordneten Absorptionsstufe oder mit Abwärme des kondensativen Verflüssigungsprozesses beheizt wird. Der Sättigungstemperaturanstieg folgt dann in Treppenstufen ebenfalls einer $\Delta$G = 0 Kennlinie. Durch den Neutralgasdruck ausgleich ist hierfür keine Systemdruck erhöhung erforderlich Aus der theoretischen Betrachtung folgt somit: Bei der thermischen Trennung von nicht oder nur wenig absorptiv wirkenden Flüssigkeitsgemischen wird die flüchtige Komponente bei nahezu derselben Temperatur ausgetrieben, wie sie kondensativ verflüssigt wird. Folglich kann die Verflüssigungsabwärme mittels einer Wärmepumpe oder einer geringfügigen Dampfverdichtung, d.h. mit einem günstigen mechanischen Energieaufwand zur Wiederverwendung beim Ausdampfprozeß aufbereitet werden. Unter Verwendung eines Neutralgasumlaufs kann die Verflüssigungsabwärme auf rekuperativem Wege, ohne mechanischen Energieaufwand dem Ausdampfprozeß wieder zugeführt werden.

Ganz anders verhält es sich bei der thermischen Trennung absorptiv wirkender Flüssigkeitsgemische. Bei derartigen Gemischen, und das ist die Mehrzahl der technischen Gemische, muß der Sättigungsdruck des Flüssigkeitsgemisches soweit angehoben werden, daß die flüchtige Komponente bei demselben Sättigungsdruck oberhalb der Umgebungstemperatur verflüssigt werden kann. Dies bedingt eine Anhebung des Ausdampftemperaturniveaus gegenüber dem Verflüssigungstemperaturniveau und, die Verflüssigungsabwärme läßt sich mit steigender absorptiver Wirkung des Gemisches nicht mehr rekuperativ, sondern nur noch unter Aufwendung zum Teil erheblicher Verdichtungsarbeit für den Ausdampfprozeß aufbereiten. Führt man ein Neutralgasumlauf in die Kombination des Ausdampfprozesses mit dem kondensativen Verflüssigungsprozeß ein, so lassen sich die Ausdampftemperaturen zwar senken, ein wirtschaftlicher Rückgewinn der Verflüssigungsabwärme wird hierdurch jedoch nicht möglich.

Ein bekannter Vorteil der Gemischtrennung in Anwesenheit eines strömenden Neutralgases ist daher das Ausdampfen der flüchtigen Gemischkomponente bei konstantem Systemgesamtdruck, über ein Temperaturintervall, bei reduzierten Ausdampftemperaturen. Deshalb wird das Verfahren alternativ zur Vakuumdestillation zur Trennung temperaturempfindlicher bzw. korrosiver oder azeotroper Flüssigkeitsgemische genutzt.

Aus der Literatur sind daher zahlreiche technische Ausführungsformen von Gemischtrennanlagen mit und ohne Neutralgasumlauf bekannt, die auf diesen abwärmefreien Prozeßablauf abzielen, indem die Verflüssigungsabwärme der ausdampfenden Komponente auf direktem, rekuperativem Wege oder auch auf indirektem Wege, über die Zwischenschaltung einer Wärmepumpe, dem Prozeß zurückgeführt werden kann.

In der DE-C-494108 sind mehrere Ausführungsformen eines mit einem Neutralgasumlauf arbeitenden Ausdampfverfahrens unter Verwendung des kondensativ wirkenden Verflüssigungsprozesses beschrieben, wobei der Gesamtstrom des Neutralgases seriell durch den Ausdampfer und der Verflüssiger zirkuliert. Gleichartige Prozeßausführungen offenbaren die DE-A-314760, die DE-A-2903008 und die US-A-3833044. Sie unterscheiden sich hinsichtlich der zu trennenden Flüssigkeitsgemische, ohne ihre absorptive Wirkung zu berücksichtigen und in einer mehr oder weniger den Abwärmerückgewinn begünstigenden Anordnung der Wärmetauscher.

In der GB-A-2142549 wird ein mit einem Neutralgasumlauf arbeitendes Verfahren zur fraktionierten destillativen Gemischtrennung unter Verwendung des kondensativ wirkenden Verflüssigungsprozesses beschrieben, wobei ein an definierter Stelle des Ausdampfprozesses vorliegender Neutralgas-Dampfgemischstrom mit der gewünschten Dampffraktion aus dem Ausdampfer abgeführt und in einen Erstverflüssiger übergeleitet und der Dampf in diesem auskondensiert wird. Um die Kondensatausbeute weiter zu erhöhen, bzw. die Fraktion zu verbessern, wird das aus dem Erstverflüssiger ausströmende Neutralgas-Restdampfgemisch anschließend verdichtet und bei höherem Gesamtdruck in einem Zweitverflüssiger auskondensiert. Der dampfabgereicherte Neutralgasstrom wird entspannt, anschließend im Gegenstrom zu dem verdichteten Neutralgasstrom als Kühlmittel durch den Zweitverflüssiger geführt und dann wieder in den Ausdampfer eingeleitet.

Auf diese Weise kann unter Zufuhr einer nicht unerheblichen Verdichtungsarbeit entweder die Kondensatausbeute erhöht oder die Fraktion verbessert und die Verdichtungsarbeit zur Gemischtrennung genutzt werden. Auf weitaus günstigere Abwärmerückkopplungsmöglichkeiten wird bei diesem Verfahren verzichtet.

Die DE-A-141986 offenbart ein Ausdampfverfahren unter Verwendung eines Neutralgasumlaufs in Kombination mit der Hintereinanderschaltung eines kondensativen und eines absorptiven Verflüssigungsprozesses.

Hier zirkuliert der Neutralgasgesamtstrom seriell durch einen Ausdampfer, einen gekühlten kondensativ wirkenden Verflüssiger und einen ungekühlten absorptiv verflüssigenden Absorber. In dem Absorber wird der Dampfgehalt des vom Verflüssiger kommenden Neutralgasgesamtstroms weiter reduziert, indem ihm der schwach absorptiv wirkende kalte Gemischzulauf entgegengeführt wird. Der kalte Gemischzulauf reichert sich unter entsprechender Eigenerwärmung als Folge der kondensativen und absorptiven Verflüssigung höher mit der Dampfkomponente an.

Die Anfangs- und Endtemperaturen des Ausdampfprozesses werden hierdurch jedoch nur unwesentlich reduziert und damit der rekuperative Abwärmerückgewinn nicht verbessert.

Kennzeichnend für die bisher diskutierten Trennverfahren mit Neutralgasumlauf ist, daß Ausdampfer, Verflüssiger und im letzten Fall auch der Absorber seriell jeweils von dem Neutralgasgesamtstrom durchströmt werden. Die Temperatur-Enthalpie-Kennlinie dieses Neutralgasgesamtstroms ist für den Wärme- und Stoffaustausch in den einzelnen Apparaten der Trennanlage bestimmend. Sie nimmt einen exponentiellen Verlauf. Das Kühlmedium im Verflüssiger, das ausdampfende Gemisch im Ausdampfer und auch das absorbierende Gemisch im Absorber folgen dagegen einer eher linearen Enthalpie-Temperatur-Kennlinie.

Während sich im Verflüssiger bei einem mengenkonstanten Kühlmitteldurchsatz eine nahezu lineare Temperaturzunahme mit einer Mindestgrädigkeit am Kondensationsanfang und am Kondensationsende einstellt, gelingt dies beim ausdampfenden Gemischstrom im Ausdampfer und beim absorbierendem Gemischstrom im Absorber jeweils nur, wenn die örtlichen Ausdampf- bzw. Absorptionsraten der Gemischströme dem Verlauf der Enthalpie-Temperatur-Kennlinie des Neutralgasstromes exakt folgen könnten, und das ist bei der Durchströmung des Ausdampfers und des Absorbers ohne eine örtliche Mengenanpassung des Neutralgasumlaufs möglich.

Zwangsläufig muß entweder der Gemischzulauf zum Ausdampfer deutlich höher aufgeheizt werden, als es der örtliche Sättigungspartialdampfdruck im Neutralgasgesamtstrom am Beginn des Ausdampfprozesses anzeigt oder aber, es muß die Austrittstemperatur des abgereicherten Lösungsmittels am Ende des Ausdampfprozesses ansteigen. Anfangs- und Endtemperatur der ausdampfenden Lösung werden darüber hinaus durch die örtliche Mindestgrädigkeit des Ausdampfprozesses angehoben.

Für diese ungünstigen Temperaturverhältnisse dieser Ausdampfprozesse werden fälschlicherweise schlechte Kühlbedingungen im Verflüssiger verantwortlich gemacht. Sie werden jedoch allein durch die mengenkonstante Neutralgasdurchströmung des Ausdampfers bewirkt.

Ähnlich ungünstige Verhältnisse liegen bei der Aufkonzentrierung des Gemischzulaufs im neutralgasseitig dem Verflüssiger nachgeschalteten Absorber vor.

Eine mengenkonstante Neutralgasdurchströmung des Absorbers läßt entweder eine vorzeitig begrenzte Aufkonzentrierung eines Teilstroms des absorptiv wirkenden Gemischzulaufs zu, wobei dieser Teilstrom unter bestimmten Voraussetzungen auf die dem Sättigungspartialdampfdruck entsprechende Temperatur des in den Absorber einströmenden Neutralgas-Dampfgemisches aufgeheizt werden kann oder aber, der Gesamtstrom des absorptiv wirkenden Gemischzulaufs kann maximal mit der Dampfkomponente angereichert werden, dann ist die Eigenerwärmung dieses Gemischstrom vorzeitig begrenzt.

In beiden Fällen kann der Partialdampfdruck der Dampfkomponente im mengenkonstanten Neutralgasstrom nicht auf den Sättigungsdruck des absorptiv wirkenden Gemischzulaufs heruntergezogen werden. Durch die höhere Anreicherung des Gemischzulaufs ergibt sich zwar eine reduzierte Anfangstemperatur des Ausdampfprozesses. Die Endtemperatur des Ausdampfprozesses ist jedoch höher als die Temperatur des abgereicherten Lösungsmittels am Austritt des Lösungswärmetauschers bei der konventionellen destillativen Trennmethode, ohne Neutralgaszirkulation. Dieser Wärmetauscher wird mit der Neutralgaszirkulation substituiert. Daher ergibt sich hierdurch keine darüber hinaus gehende Reduzierung des energetischen Trennaufwands.

Folglich müssen die exponentiellen Enthalpie-Temperatur-Kennlinien des Neutralgases den linearen $\Delta G = 0$ Kennlinien der Flüssigkeitsströme beim Ausdampfprozeß (Ausdampfkennlinie) und bei kondensativen bzw. absorptiven Verflüssigungsprozeß (Kondensations- bzw. Absorptionskennlinie) angepaßt werden. Diese Maßnahme ist unabhängig davon erforderlich, ob ein absorptiv wirkendes oder ein nichtabsorptiv wirkendes Flüssigkeitsgemisch zu trennen ist.

Die Linearisierung der Neutralgaskennlinien gelingt bei der Kombination des Ausdampfprozesses mit dem kondensativen Verflüssigungsprozeß, wie in der US-A-4915792 beschrieben, indem Neutralgas-Dampfgemisch-Teilströme mit unterschiedlichen Dampfgehalten temperaturgestuft aus dem Ausdampfer abgeführt und an Orten mit entsprechend gleichen Temperaturen im kondensativ wirkenden Flüssigkeitsstrom in den Verflüssiger eingeleitet werden.

Der Neutralgasmengenstrom nimmt hierdurch bei der Durchströmung des Ausdampfers stetig ab und bei der Durchströmung des Verflüssiger stetig zu, und nur jeweils am Verflüssigeraustritt und am Ausdampfereintritt liegt bei diesem Verfahren der Neutralgasgesamtmengenstrom vor.

Die theoretischen Grundlagen zu dem offenbarten Verfahren sind bereits in der DE-C-675538 bzw. GB-A-494693 aus dem Jahre 1937 angegeben. Sie werden anschließend diskutiert. In der Verfahrensausgestaltung enthält das in der US-A-4915792 offenbarte Trennverfahren jedoch gravierende funktionelle Mängel.

Erstens ist der Gaswärmetauscher unzweckmäßig, da nur Neutralgas-Dampfgemischteilströme aus dem Ausdampfer zu temperaturgleichen Orten in den Verflüssiger überwechseln und ein Kondensatrücklauf in den Ausdampfer unbedingt vermieden werden muß. Deshalb muß der Neutralgasgesamtstrom innerhalb des Verflüssigers ohne Stoffaustausch im Gleichstrom mit dem Kondensatstrom aufgeheizt werden und anschließend innerhalb des Ausdampfers ohne Stoffaustausch im Gleichstrom mit dem ausdampfenden Gemischstrom seine Wärme wieder an das ausdampfende Gemisch abgeben. Mit dieser Maßnahme werden Wärmeverschleppungen des Neutralgases aus dem Ausdampfer zum kondensativen Verflüssiger kompensiert.

Zweitens läßt sich der ausdampfende Lösungsstrom nicht auf die erforderliche Anfangstemperatur des Ausdampfprozesses aufheizen, weil die rekuperative Abwärmeübertragung nicht extern im Gegenstromprinzip, sondern innerhalb des Ausdampfers nach dem Gleichstromprinzip ausgeführt wurde. Damit brechen der Stoffaustauschprozeß und auch der rekuperative Abwärmerückkopplungsprozeß funktionell zusammen.

Nach einer Beseitigung dieser Mängel eignet sich das in der US-A-4915792 offenbarte Verfahren nur für die Teilentfeuchtung von Lösungen mit vernachlässigbarer Trennarbeit, beispielsweise zur Meerwasserentsalzung. Für eine vollständige Trennung der Gemischkomponenten ist das Verfahren ungeeignet, weil die absorptive Wirkung eines jeden Gemisches mit der Verarmung der flüchtigen Komponente ansteigt. Der theoretisch aufgezeigte Energierückgewinnung ist für den gedachten Einsatzfall jedoch unbestritten, er stellt aber noch nicht den maximal möglichen Betrag dar. Denn bei richtiger Wärmetauscheranordnung kann die gesamte Verflüssigungsabwärme für Eine Methode zur Linearisierung der Wärme- und Stoffaustauschvorgänge für die Kombination des Ausdampfprozesses mit einem absorptiven Verflüssigungsprozeß ist in der DE-C-675538 beschrieben. Sie wurde von Maiuri im Kälteteil einer Absorptionskältemaschine angewandt.

Die Neutralgasatmosphäre ist unter niederem Systemgesamtdruck stehend im Maiuri-Kälteteil eingeschlossen und zirkuliert mit gestuft abnehmendem Mengenstrom durch den Ausdampfer und mit gestuft zunehmendem Mengenstrom durch den Absorber und mit seinem Gesamtstrom, dampfbeladen und dampfentladen, den Gaswärmetauscher des Kälteteils.

Diesem Maiuri-Kälteteil ist ein konventioneller mit höherem Sättigungsdruck arbeitender destillativer Gemischtrennteil ohne Neutralgasumlauf gegengeschaltet. Er versorgt den zu kühlenden Maiuri-Absorber mit dem absorptiv wirkenden Lösungsmittel und den zu beheizenden Maiuri-Verdampfer mit nahezu reinem Kältemittelkondensat. Das aus dem Maiuri-Absorber abzuführende Flüssigkeitsgemisch fördert eine Lösungspumpe zurück in den konventionellen Trennteil, wo es auf destillativem Wege wieder in seine flüssigen Ausgangskomponenten zerlegt wird, die anschließend wieder auf getrennten Wegen dem Maiuri-Kälteteil zugeführt werden.

Zur Linearisierung der Enthalpie-Temperatur-Kennlinien des Neutralgasumlaufs im Kälteteil führt Maiuri definierte Neutralgas-Dampfgemisch-Teilströme mit gestuft zunehmenden Kältemitteldampfgehalten aus dem Verdampfer ab, führt diese ohne gegenseitige Durchmischung im Gegenstrom zum dampfentladenen Neutralgasgesamtstrom durch den Gaswärmetauscher und leitet die aufgeheizten Teilströme an Stellen mit entsprechendem Kältemittelpartialdruck im absorptiv wirkenden Lösungsstrom in den Absorber ein.

Die aus dem Verdampfer abgeführten Neutralgas-Dampfgemischteilströme sind von Maiuri so festgelegt, daß das durch den Verdampfer im Gegenstrom zum ausdampfenden reinen Kältemittel strömende Neutralgas-Dampfgemisch in gleichen differentiellen Temperaturintervallen jeweils gleiche differentielle Dampfmengen aufnimmt.

Hiermit erzwingt er im Verdampfer bei Ausdampftemperaturen unterhalb der Umgebungstemperatur eine lineare Änderung der Kältemittel-Sättigungstemperatur über einen weiten Temperaturbereich und im Absorber bei Temperaturen oberhalb der Umgebungstemperatur eine isotherme absorptive Verflüssigung desselben Kältemitteldampfes in der Lösungsmittelkomponente. Ein Anstieg der Sättigungstemperatur mit zunehmender Konzentration der gelösten Dampfkomponente ist bei diesem Verfahren nicht möglich.

Die Partialdampfdruckänderungen im Neutralgas-Dampfgemischumlauf und in den ausdampfenden bzw. absorbierenden Flüssigkeitsströmen sind bei der Durchströmung des Verdampfers und des Absorbers betragsgleich jedoch entgegengerichtet.

Durch Wärmeaufnahme im Verdampfer läßt sich auf diese Weise ein externer Fluidstrom auf extrem niedere Temperaturen abkühlen und die mit der Verdampfung des Kältemittels aufgenommene Wärme bei der isothermen absorptiven Verflüssigung aus dem Absorber an die Umgebung abführen.

Konzeptionell ist die von Maiuri beschriebene Methode richtig, ebenso die vorgeschlagene Zwischenschaltung des Gaswärmetauschers in den Neutralgas-Dampfgemischumlauf. Denn, wie bereits diskutiert wurde, folgt aus dem Gibbs-Helmholtz'schen Gesetz, daß die aus dem Verdampfer abströmenden Neutralgas-Dampfgemischteilströme jeweils vor der absorptiven Verflüssigung der Dampfkomponente auf die Absorptionstemperatur vorgeheizt werden müssen, damit dieser Dampf im Absorber isotherm bei der höchstmöglichen Temperatur in der Lösung absorbiert werden kann. Außerdem bewirkt der Gaswärmetauscher, daß der zum Verdampfer strömende dampfabgereicherte Neutralgasgesamtstrom auf eine tiefe Temperatur abgekühlt wird. Nur auf diese Weise läßt sich der externe Fluidstrom im Verdampfer möglichst weit herunterkühlen.

Dagegen sind die Mengenstöme der aus dem Verdampfer abzuführenden, mit Kältemitteldampf gestuft angereicherten Neutralgasteilströme nach einem anderen Kriterium zu definieren, als dies von Maiuri angegeben wurde (Zeitschrift für die gesamte Kälteindustrie, Heft 10, Okt. 1939, 46. Jahrgang, S. 169-174).

Die Bestimmungsgröße für die aus dem Verdampfer abzuführenden dampfbeladenen Neutralgas-Teilmengenströme ist nicht die konstante differentielle Kältemittelausdampfrate in einem beliebigen differentiellen Temperaturintervall des Ausdampfprozesses, sondern die über das Konzentrationsintervall der Lösungsmittelanreicherung veränderliche differentielle Dampfabsorptionsrate des Absorptionsprozesses. Sie ist nicht nur vom Betrag der Konzentrationsänderung, sondern auch von der Anfangskonzentration des im Lösungsmittel gelösten Kältemittels abhängig und nimmt mit der Kältemittelanreicherung zu. Allein hierdurch wird die maximal mögliche Abkühlung des externen Fluidstromes im Maiuri-Verdampfer begrenzt.

Diese differentielle Dampfabsorptionsrate nimmt bei einer nicht zu groß gewählten Entgasungsbreite, d.h. Gesamtkonzentrationsänderung des Absorptionsprozesses nahezu linear zu. Ihr kontanter Änderungsbetrag muß jedoch klein gehalten werden.

Entscheidend für die Linearisierung der Enthalpie-Temperatur-Kennlinie des Neutralgases ist damit, daß das Neutralgas in diskreten Partialdampfdruckintervallen gleiche Dampfmengen aufnehmen und auch wieder abgeben kann. Folglich darf die umlaufende Neutralgasgesamtmenge nicht integral über den Gesamtpartialdruckbereich bestimmt werden, sondern nur über die diskreten Partialdruckintervalle in den betragsgleichen Konzentrationsintervallen. Je geringer der Anfangspartialdruck gegenüber dem Systemgesamtdruck ist, um so größer ist der erforderliche Neutralgasstrom im ersten diskreten Partialdruckintervall, und der hierfür erforderliche Neutralgasmengenstrom nimmt mit ansteigendem mittlerem Partialdampfdruck exponentiell ab. Das wurde von Maiuri ebenfalls nicht berücksichtigt.

Dies zeigt sich insbesondere bei der Prozeßumkehrung, wenn unter Verwendung eines mengenangepaßten Neutralgasumlaufs, mit linearen Enthalpie-Temperatur-Kennlinien im Ausdampfprozeß und im kondensativen Verflüssigungsprozeß die flüchtige Gemischkomponente bei einem auskondensierfähigen Druck aus einem absorptiv wirkenden, aufgeheizten Gemischstrom ausdampfen und sich hierbei der abreichernde Gemischstrom über ein möglichst großes Temperaturintervall linear abkühlen soll.

Zunächst ist nochmals anzumerken, daß zur kondensativen Rückverflüssigung der aus einem sorptiven Flüssigkeitsgemisch ausgetriebenen Dampfkomponente der Sättigungsdruck des ausdampfenden Gemisches soweit angehoben werden muß, daß die Verflüssigungsabwärme an die Umgebung abgegeben werden kann. Das hat die Anhebung des Ausdampftemperaturniveaus gegenüber der kondensativen Rückverflüssigungstemperatur zur Folge und bewirkt, daß die Verflüssigungsabwärme nicht mehr auf direktem Wege dem Ausdampfprozeß zugeführt werden kann. Die Kombination von Ausdampfprozeß und kondensativem Rückverflüssigungsprozeß unter Verwendung eines Neutralgasumlaufs mit linearisierter Enthalpie-Temperatur-Kennlinie bietet daher für die Trennung sorptiv wirkender Flüssigkeitsgemische keine neuen Möglichkeiten zur Reduzierung des thermischen Trennaufwands.

Kombiniert man dagegen den Ausdampfprozeß mit einem absorptiven Rückverflüssigungsprozeß, so kann die Verflüssigungsabwärme der ausgetriebenen Dampfkomponente für den Ausdampfprozeß nur genutzt werden, wenn das zerlegte Ausgangsgemisch wieder gebildet wird. Nur unter dieser Voraussetzung sind Ausdampf- und Rückverflüssigungstemperaturniveau identisch. Die Produktausbeute der ausgetriebenen Dampfkomponente wird allerdings zu Null.

Als Trennverfahren ist daher diese Kombination ebenfalls ungeeignet. Sie bietet aber als geschlossener Stoffkreislauf eine neue Möglichkeit der Direktumwandlung von Wärme in entropiefreie chemische Nutzarbeit. Hierbei kann der beim Absorptionsprozeß entstehende Nutzarbeitsanteil ausgekoppelt und der entropiebehaftete reversible Abwärmeanteil intern rekuperativ rückgekoppelt und beim Ausdampfprozeß wiederverwendet werden. Diese Prozeßkombination benötigt im Idealfall zur Gemischtrennung nur soviel Heizwärme von außen zugeführt, wie ihr bei der absorptiven Gemischbildung als Nutzarbeit nach außen entzogen wird. Wird ein elektrolytisches, absorptiv wirkendes Flüssigkeitsgemisch stetig thermisch getrennt und in einem zur galvanischen Konzentrationszelle ausgebildeten Absorber wieder rekombiniert, so kann die chemische Nutzarbeit als elektrische Energie aus dem Prozeß abgeführt und genutzt werden.

Eine Aufgabe der Erfindung ist es daher, diese neuen theoretischen Erkenntnisse für die Reduktion des thermischen Trennaufwands bei der Zerlegung von sorptiven und nicht-sorptiven Flüssigkeitsgemischen zu nutzen und den Abwärmebetrag auf einen Wert zu reduzieren, wie er bei den genutzten Gegenstromwärmetauschern durch die technische Mindestgrädigkeit gegeben ist.

Eine weitere Aufgabe der Erfindung ist es, bei der Trennung von sorptiven Gemischen den überwiegenden Anteil des entropiefreien Trennarbeitsbedarfs über einen partiell oder vollständig geschlossenen Stoffkreislauf als Wärme aus der Umgebung aufzunehmen und damit auch die Wärmetransformation zu ermöglichen.

Darüber hinaus ist eine Aufgabe der Erfindung, durch Kombination des thermischen Ausdampfprozesses mit einem sorptiven elektrochemischen Rückverflüssigungsprozeß in einem geschlossenen elektrolytischen Gemischkreislauf Wärme in entropiefreie Nutzarbeit überzuführen und diese wie in einer Brennstoffzelle in elektrische Energie zu konvertieren und an einen äußeren Verbraucher abzuführen.

Die Aufgabe der energiesparenden, abwärmefreien Gemischtrennung wird am einfachsten bei nicht- oder nur schwach-sorptiven Flüssigkeitsgemischen gelöst. Gemäß dem Stand der Technik erfolgt die thermische Gemischtrennung und Dampfrückverflüssigung mit Hilfe eines Neutralgasumlaufs mit linearisierter Temperatur-Enthalpie-Kennlinie über ein Sättigungstemperaturintervall. Die Dampfaufnahme des Neutralgases findet in einem Ausdampfer bei ansteigender Temperatur statt und die Auskondensation des im Neutralgas gespeicherten Dampfes bei abfallender Temperatur in einem Kondensator. Die Linearisierung der Neutralgas-Kennlinie wird mit einer Mengenanpassung des Neutralgasumlaufs vorgenommen, indem dampfgesättigte Neutralgasteilströme mit gestuft zunehmenden Dampfgehalten aus dem Ausdampfer abgezweigt und in den Kondensator übergeleitet werden. Das Neutralgas zirkuliert hierdurch mit abnehmendem Mengenstrom durch den Ausdampfer und mit zunehmendem Mengenstrom durch den Kondensator und bewirkt, daß sich das ausdampfende Gemisch über ein Sättigungstemperaturintervall stetig abkühlt und auf der Gegenseite das die Verflüssigungsabwärme der ausgedampften Gemischkomponente aufnehmende Kühlmittel über dasselbe Temperaturintervall stetig aufheizt. Dadurch kann der kalte Gemischzulauf als abwärmeaufnehmendes Kühlmittel verwendet werden.

Gemäß Anspruch 7 gelingt diese rekuperative Abwärmeaufnahme des kalten Gemischzulaufs, indem dieser entweder im Gegenstrom zum dampfabzureichernden Neutralgas durch eine im Kondensator angeordnete Wärmeaustauscheinrichtung geführt ist, oder im Gegenstrom zu einem die Verflüssigungsabwärme und die zuverflüssigende Dampfkomponente aufnehmenden Flüssigstrom der ausgetriebenen Dampfkomponente durch eine extern angeordnete Wärmeaustauscheinrichtung, wobei dieser wärme- und stoffaufnehmende Flüssigstrom in einem Kreislauf, im Wärme- und Stoffkontakt mit dem dampfgesättigten Neutralgas durch den Kondensator geführt ist und im Wärmekontakt zum Gemischzulauf durch die externe Wärmeaustauscheinrichtung.

Die aus dem Ausdampfer in den Kondensator überwechselnden Neutralgas-Dampfgemischteilströme sind erfindungsgemäß so eingestellt, daß in diskreten Partialdampfdruckintervallen jeweils dieselben Dampfmengen vom ausdampfenden Gemischstrom in den Neutralgasstrom überwechseln bzw. in umgekehrter Richtung vom Neutralgas an den wärme- und dampfaufnehmenden Kühlmittelstrom überwechseln. Die abgezweigten dampfgesättigten Neutralgas-Teilströme wechseln hierbei ohne gegenseitigen Wärmeaustausch zu temperatur- und partialdampfdruckgleichen Orten in den Kondensator.

Eine Heizquelle beheizt den rekuperativ vorgewärmten Gemischzulauf oder das rekuperativ rückerwärmte dampfabgereicherte Neutralgas. Die verflüssigte Dampfkomponente verläßt ohne weitere Kühlung die Trenneinrichtung am kalten Ende des Kondensators und die aufkonzentrierte Flüssigkomponente, ebenfalls ohne weitere Kühlung am kalten Ende des Ausdampfers.

Ein die Erfindung weiterbildender Gedanke ist, daß das dampfabgereicherte Neutralgas seinen Wärmeverschleppungen entgegenwirkend, gemäß Anspruch 8, wärmeaufnehmend eine im Kondensator angeordnete erste Wärmeaustauscheinrichtung durchströmt und anschließend wärmeabgebend eine im Ausdampfer angeordnete zweite Wärmeaustauscheinrichtung.

Die abwärmefreie thermische Trennung von sorptiven Flüssigkeitsgemischen gelingt gemäß Anspruch 1 mittels der Prozeßkombination einer in einem Ausdampfer in Anwesenheit eines Neutralgases stattfindenden Gemischausdampfung mit der Rückverflüssigung des im Neutralgas gespeicherten Dampfes durch Auskondensation, Resorption des Restdampfgehalts im Gemischzulauf und Absorption des nicht resorbierten Restdampfes in einem rezyklierten Teilstrom der aus dem Gemisch separierten Flüssigkomponente. Für den Wärme- und Stoffausgleich sind die Temperatur-Enthalpie-Kennlinien des Neutralgasumlaufs im Ausdampfer und in den sorptiven Verflüssigern linearisiert.

Das Neutralgas durchströmt hierfür in entgegengesetzter Richtung zu den jeweiligen Flüssigkeitsströmen mengenangepaßt den Ausdampfer, den Resorber und den Absorber. Der Mengenstrom des sich dampfanreichernden Neutralgases nimmt im Ausdampfer gestuft ab und des sich dampfabreichernden Neutralgases im Resorber beginnend und im Absorber endend gestuft zu, indem einzelne dampfgesättigte Neutralgasteilströme, mit gestuft zunehmenden Dampfgehalten aus dem Ausdampfer entnommen und an temperatur- und partialdampfdruckgleichen Orten in die sorptiven Verflüssiger eingeleitet sind.

Der kalte Gemischzulauf wird als rekuperativ wirkendes, abwärmeaufnehmendes Kühlmittel durch einen Gegenstromwärmetauscher und den Kondensator geführt. Ein Teilstrom der Flüssigkomponente des zerlegten Gemisches wird rezykliert, durchströmt wärme- und dampfaufnehmend den Absorber und gemeinsam mit dem rekuperativ aufgeheizten Gemischzulauf, wärme- und dampfaufnehmend den Resorber. Der vom Resorber kommende Gemischablauf wird mit einer externen Heizquelle beheizt und das Flüssigkeitsgemisch im Ausdampfer unter steter Abkühlung in eine Dampfkomponente und eine unverdampfte Flüssigkomponente zerlegt.

Die kondensativ zu verflüssigende Dampfkomponente strömt mit reduziertem Neutralgasgehalt vom Ausdampfer in den Kondensator über, wird unter rekuperativer Erwärmung des Gemischzulaufs verflüssigt und anschließend zur Unterkühlung durch den Gegenstromwärmetauscher geleitet und dann am kalten Ende des Gegenstromwärmetauschers als Produktstrom abgeführt. Die unverdampfte Flüssigkomponente wird am kalten Ende des Ausdampfers abgeführt, der Produktstrom verläßt die Trennapparatur über den Gegenstromwärmetauscher, der zu rezyklierende Teilstrom wird in den Absorber eingeleitet.

Den Wärmeverschleppungen des Neutralgasumlaufs wird gemäß Anspruch 2 mit einer Wärmeübertragungseinrichtung begegnet, mit welcher der dampfabgereicherte Neutralgasgesamtstrom in den sorptiven Verflüssigern rekuperativ rückerwärmt und im Ausdampfer rekuperativ abgekühlt wird.

Die Aufgabe der Wärmetransformation bzw. der Gewinnung von thermischer Trennenergie aus Umgebungswärme wird gemäß Anspruch 3 dadurch gelöst, daß dem Verfahren nach Anspruch 1 ein Maiuri-Kälteteil gegengeschaltet ist, wobei dem Maiuri-Kälteteil zur Gewinnung von thermischer Trennenergie Teilströme der Produktabläufe des Gemischtrennteils zugeführt werden und zur Wärmetransformation die Gesamtströme der Produktabläufe. Die Temperatur-Enthalpie-Kennlinien des Neutralgasumlaufs im Maiuri-Kälteteil sind in der gleichen Weise linearisiert wie im Gemischtrennteil.

Der nach der Gibbs'schen Fundamentalgleichung maximal mögliche Temperatursprung der Verflüssigungswärme wird, gemäß Anspruch 4, dadurch erzielt, daß in dem Neutralgasumlauf des Maiuri-Kälteteils ein Gasgegenstromwärmetauscher angeordnet ist, der auf der wärmeaufnehmenden Seite von den dampfbeladenen Neutralgas-Teilströmen des Maiuri-Verdampfers beaufschlagt ist und auf der wärmeabgebenden Seite von dem dampfentladenen Neutralgasgesamtstrom des Maiuri-Absorbers und dem Kondensatablauf des Gemischtrennteils. Mit dieser Maßnahme wird zugleich den Wärmeverschleppungen des Neutralgases im Maiuri-Kälteteil entgegengewirkt.

Die Aufgabe der Umwandlung von Wärme in entropiefreie chemische Nutzarbeit und von chemischer Nutzarbeit in elektrische Energie wird gemäß Anspruch 5 dadurch gelöst, daß in einem geschlossenen Stoffkreislauf der thermischen Gemischausdampfung eine absorptive Dampfrückverflüssigung gegengeschaltet ist, wobei ein sorptiv wirkendes Flüssigkeitsgemisch in einem Ausdampfteil, unter Heizwärmezufuhr in zwei elektrochemisch reaktive Komponenten - eine Flüssigkomponente und eine Dampfkomponente - zerlegt wird, beide Gemischkomponenten in getrennten Leitungen in einen Absorptionsteil übergeleitet werden und darin elektrochemisch zum Ausgangsgemisch rekombinieren und das Ausgangsgemisch wieder in den Ausdampfteil zurückgeleitet wird.

Der Absorptionsteil ist als galvanische Konzentrationszelle ausgestaltet und bildet zusammen mit einem äußeren Verbraucher einen elektrischen Stromkreislauf. In der galvanischen Konzentrationszelle wird der entropiefreie chemische Nutzarbeitsanteil des sorptiven Rekombinationsprozesses in elektrische Energie umgewandelt und über den elektrischen Stromkreislauf an den äußeren Verbraucher abgegeben.

Mit einer rekuperativ wirkenden Wärmeübertragungseinrichtung wird der nichtwandlungsfähige, entropiebehaftete reversible Abwärmeanteil des elektrochemischen Rekombinationsprozesses aus dem Absorptionsteil abgeführt und dem Ausdampfteil wieder zugeführt. Der für die Abwärmerückführung erforderliche Temperaturhub kann entweder über eine mechanische Druckanhebung der zerlegten Gemischkomponenten oder mittels einer Wärmepumpe ausgeführt werden.

Ohne Nutzarbeitsaufwand läßt sich dieser nichtwandlungsfähige entropiebehaftete reversible Wärmestrom mittels der Wärmeübertragungseinrichtung vom Absorber zum Ausdampfer führen, wenn dem differenzdrucklosen Prozeß eine mengenangepaßt umlaufende Neutralgasatmosphäre aufgeprägt ist, deren Temperatur-Enthalpie-Kennlinie dem elektrisch auszukoppelnden Nutzarbeitsbetrag angepaßt ist.

Wird bei der Gemischausdampfung kein reiner Dampf sondern ein Dampfgemisch gebildet, so lassen sich gemäß Anspruch 6 Flüssigkeitsverschleppungen vom Ausdampfer in den kondensativen Verflüssiger mit einem ergänzenden Dephlegmationsprozeß vermeiden. Der gereinigte Dampf wird in den Kondensator eingeleitet, die auskondensierte Flüssigkomponente (das Dephlegmat) strömt über Kopf in den Ausdampfer zurück.

Die Erfindung wird an Hand der folgenden Figuren näher erläutert:

Fig. 1 zeigt ein vereinfachtes Kreislaufschema zur stofflichen Trennung und Rekombination eines sorptiven Flüssigkeitsgemisches,

Fig.2a zeigt die Energiebilanzwerte unter Verwendung der Gibbs'schen Fundamentalgleichung für die isobare Trennung und Rekombination einer 10 w %-tigen $NH_3$-$H_2O$ Lösung in einem Kreislauf, gemäß Fig.1,

Fig.2b zeigt die Energiebilanz für die isotherme Trennung und Rekombination dieses $NH_3$-$H_2O$ Gemisches,

Fig. 3 zeigt das Fließbild des Verfahrens mit Neutralgasumlauf zur thermischen Trennung von nicht-sorptiven Flüssigkeitsgemischen,

Fig.4 zeigt das Fließbild des Verfahrens mit Neutralgasumlauf zur thermischen Trennung von sorptiven Flüssigkeitsgemischen,

Fig.5a zeigt das Verfahrensfließbild eines thermoelektrochemischen Energiewandlers mit interner Abwärmerückkoppelung,

Fig.5b zeigt die Temperaturverhältnisse des Verfahrens nach Fig.5a,

Fig.6a zeigt das Verfahrensfließbild eines thermoelektrochemischen Energiewandlers mit interner Abwärmerückkoppelung und Rektifiziereinrichtung,

Fig.6b zeigt die Temperaturverhältnisse des Verfahrens nach Fig.6a und

Fig.7 zeigt das Verfahrensfließbild des Wärmetransformators.

Der isobare oder isotherme Kreisprozeß gemäß Fig.1 wird mit einem sorptiven Flüssigkeitsgemisch ausgeführt. Er enthält einen Ausdampfer, in dem das Gemisch zerlegt wird und einen Absorber, in dem das Gemisch aus den Gemischkomponenten wieder rekombiniert wird. Aus dem Ausdampfer werden die beiden Gemischkomponenten (Flüssigkomponente und Dampfkomponente) in getrennten Leitungen abgeführt und in den Absorber eingeleitet. Das sich im Absorber aus den Gemischkomponenten bildende Gemisch wird wieder in den Ausdampfer zurückgeleitet und dann erneut getrennt. Der Absorber enthält eine Kühleinrichtung zur Auskoppelung des entropiebehafteten Abwärmestromes und eine weitere Einrichtung zur Auskoppelung des entropiefreien Nutzarbeitsstromes. Der Stoffkreislauf wird über eine Heizeinrichtung mit thermischer Energie versorgt. Der entropiefreie Nutzarbeitsstrom des Rekombinationsprozesses kann über die Auskoppelungseinrichtung aus dem Absorber abgeführt werden und der entropiebehaftete Energiestrom über eine Abwärmerückkoppelungseinrichtung wieder dem Ausdampfprozeß zugeführt werden. Ausdampfprozeß im Ausdampfer und Rekombinationsprozeß im Absorber verlaufen entweder isobar, über dasselbe Sättigungstemperaturintervall oder isotherm, über dasselbe Sättigungspartialdampfdruckintervall.

Unter diesen Voraussetzungen stimmen die Energieströme des Absorbers mit denen des Ausdampfers überein. Die Gibbs'schen Energiebeträge des isothermen Prozesses unterscheiden sich hierbei deutlich von denen des isobaren Prozesses.

Fig.2a zeigt die Gibbs'sche Energiebilanz für den isobaren Stoffkreislauf, am Beispiel der Trennung und Rekombination eines 15 w %-tigen $NH_3$-$H_2O$ Flüssigkeitsgemisches. Das Gemisch wird aus einer reinen $H_2O$-Flüssigkomponente und einer Dampfgemischkomponente gebildet, wie sie bei der Prozeßumkehrung, d.h. bei der thermischen Trennung des 10 w %-tigen $NH_3$-$H_2O$ Gemisches in einem kontinuierlichen Prozeß entsteht. Die Phasengleichgewichtszustandsgrößen der Gemischkomponenten und des Gemisches wurden mit dem Elektrolytprogramm ASPEN-PLUS berechnet und die spezifischen Komponentenmengenströme aus den Konzentrationen nach Gl.9 bestimmt.

Fig. 2b zeigt die Gibbs'sche Energiebilanz für den isothermen Stoffkreislauf, wie er mit einem dem Stoffkreislauf aufgeprägten Neutralgasumlauf möglich ist. Die Ergebnisse der Fig.2a und 2b wurden bereits in den theoretischen Analysen ausführlich diskutiert und bedürfen hier keiner weiteren Erklärung.

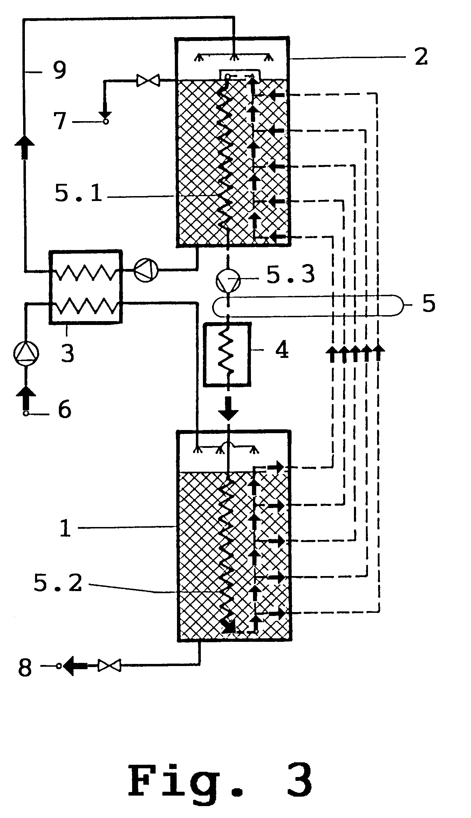

Apparativer Aufbau und Funktionsweise des thermischen Verfahrens mit Neutralgasumlauf zur Trennung von nicht- oder nur schwach-sorptiven Flüssigkeitsgemischen werden an Hand des Ausführungsbeispiels der Fig. 3 näher erläutert. Die Trennapparatur besteht aus dem Ausdampfer 1, dem Kondensator 2, dem Gegenstromwärmetauscher 3 und der Heizeinrichtung 4.

Durch und zwischen dem Ausdampfer 1 und dem Kondensator 2 zirkuliert die wärme- und stoffaustauschende Neutralgasatmosphäre 5. Die Zirkulation des Neutralgases wird mit dem Ventilator 5.3 bewirkt. Zur Wärmeaufnahme durchströmt die kalte, dampfabgereicherte Neutralgasgesamtmenge 5 nacheinander die im Kondensator 2 angeordnete Wärmeaustauscheinrichtung 5.1 und die extern angeordnete Heizeinrichtung 4 und daran anschließend zur Wärmeübergabe an das ausdampfende Flüssigkeitsgemisch 6 die im Ausdampfer 1 angeordnete Wärmeaustauscheinrichtung 5.2. Am kalten Ende des Ausdampfers 1 kommt das dampfabgereicherte Neutralgas 5 in stofflichen Kontakt mit dem ausdampfenden Flüssigkeitsgemisch 6 und wird diesem wärme- und dampfaufnehmend, in Stufen mengenreduziert entgegengeführt. Die im Zusammenhang mit der Linearisierung der Temperatur-Enthalpiestrom-Kennlinie des Neutralgases in den einzelnen Stufen anfallenden dampfbeladenen Neutralgas-Überschußmengen werden aus dem Ausdampfer 1 über separate Leitungen abgeführt und an zustandsmäßig übereinstimmenden Orten in den Kondensator 2 eingeleitet. Den Kondensator 2 durchströmt das hierdurch wieder zur Gesamtmenge kumulierende Neutralgas 5 im Gegenstrom zu dem wärme- und dampfaufnehmenden Kühlmittel 9.

Der kalte Gemischzulauf 6 durchströmt unter Erwärmung den Gegenstromwärmetauscher 3 und wird am oberen warmen Ende in den Ausdampfer 1 eingeleitet. Die abgereicherte Flüssigkomponente 8 wird am unteren kalten Ende aus dem Ausdampfer 1 abgezogen. Als wärme- und dampfaufnehmendes Kühlmittel durchströmt den Kondensator 2 ein dem Mengenstrom des Gemischzulaufs 6 entsprechender Flüssigstrom 9 der ausdampfenden Gemischkomponente 7. Er zirkuliert zur Wärmeübergabe an den Gemischzulauf 6 im Gegenstrom ohne Stoffaustausch durch den Wärmetauscher 3 und unter Wärme- und Stoffaufnahme im Gegenstrom zum dampfabzureichernden Neutralgas durch den Kondensator 2. Die auskondensierte Gemischkomponente 7 tritt am oberen kalten Ende des Kondensators 2 aus.

Ausdampfer 1 und Kondensator 2 sind Fallstromapparate und enthalten für einen guten direkten Wärme- und Stoffaustausch Einbauten. Dem Gemischzulauf 6 wird die Menge des im Kreislauf geführten Kühlmittels 9 derart angepaßt, daß sich im Ausdampfer 1 und im Kondensator 2 gleiche Temperaturintervalle einstellen.

Mit dieser rekuperativen Abwärmeübernahme aus dem Kühlmittel 9 im Gegenstromwärmetauscher 3 kann der kalte Gemischzulauf 6 nahezu bis auf seine obere Ausdampftemperatur aufgeheizt werden.

Die über die Erwärmung des Neutralgases aus dem Ausdampfer 1 in den Kondensator 2 verschleppte Wärme wird mit den Wärmeaustauscheinrichtungen 5.1 und 5.2 in den Ausdampfer 1 zurückgeführt. Mit der dargestellten Beheizung des rekuperativ rückerwärmten Neutralgases in der Heizquelle 4 läßt sich vorteilhaft das Mengenverhältnis der wärmeaustauschenden Fluidströme 6 und 9 stabilisieren.

Die stufenweise Mengenanpassung des Neutralgasumlaufs ist zahlenmäßig so vorgenommen, daß die lineare Temperatur-EnthalpiestromKennlinie des Neutralgases Ausdampfung und Rückverflüssigung der ausdampfenden Gemischkomponente 7 über ein möglichst großes überlappendes Temperaturintervall gestattet. So bleibt die mit den flüssigen Produktabläufen 7 und 8 abfließende Verlustwärme klein.

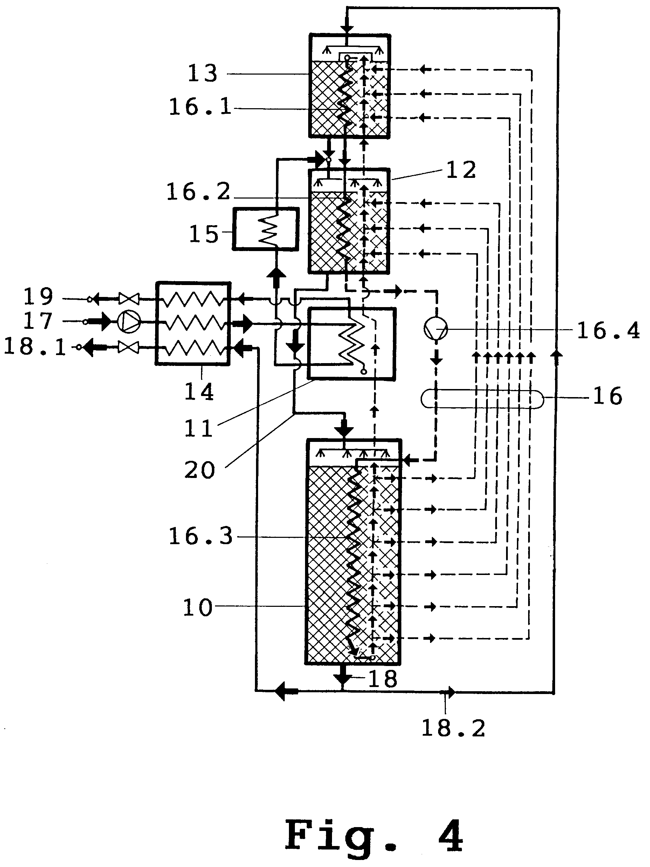

Apparativer Aufbau und Funktionsweise des thermischen Verfahrens mit Neutralgasumlauf zur Trennung von sorptiven Flüssigkeitsgemischen werden am Ausführungsbeispiels der Fig. 4 erläutert. Die Trennapparatur enthält den Ausdampfer 10, den kondensativen Verflüssiger (Kondensator) 11, den sorptiv verflüssigenden Resorber 12, den sorptiv verflüssigenden Absorber 13, den Gegenstromwärmetauscher 14 und die Heizeinrichtung 15.

Dem Ausdampfer 10 und den Verflüssigern 11, 12 und 13 ist die Neutralgasatmosphäre 16 aufgeprägt. Sie zirkuliert mengenangepaßt durch und zwischen dem Ausdampfer 10 und den Verflüssigern 11, 12 und 13. Für die Linearisierung der Temperatur-Enthalpiestrom-Kennlinien werden aus dem Ausdampfer 10 dampfgesättigte Neutralgas-Teilströme mit gestuft zunehmenden Dampfgehalten abgezweigt und zu temperatur- und konzentrationsgleichen Orten in die Verflüssiger 11, 12 und 13 übergeleitet. Der Neutralgasumlauf 16 wird mit dem Ventilator 16.4 bewirkt. Der kalte, dampfabgereicherte Neutralgasgesamtstrom passiert wärmeaufnehmend die in den sorptiven Verflüssigern 12 und 13 angeordneten Wärmeaustauscheinrichtungen 16.1 und 16.2 und wärmeabgebend die im Ausdampfer 10 angeordnete Wärmeaustauscheinrichtung 16.3. Im wieder abgekühlten Zustand strömt die dampfabgereicherte Neutralgasgesamtmenge 16 wärme- und dampfaufnehmend dem ausdampfenden Flüssigkeitsgemisch 20 im Ausdampfer 10 in Stufen mengenreduziert entgegen. Der zu trennende Gemischzulauf 17 wird zunächst als abwärmeaufnehmendes Kühlmittel durch den Gegenstromwärmetauscher 14 und anschließend durch den Kondensator 11 geleitet. Er durchströmt im Anschluß daran die externe Heizeinrichtung 15 und wird in ihr bis auf die am Beginn des resorptiven Verflüssigungsprozesses erforderliche Sättigungstemperatur aufgeheizt. Anschließend durchströmt er gemeinsam mit dem im Absorber 13 rückangereicherten, rezyklierten Teilstrom 18.2 der Flüssigkomponente 18 als Gemischgesamtstrom 20 wärme- und dampfaufnehmend den Resorber 12. Im Resorber 12 reichert sich der Gemischgesamtstrom 20, unter steter Temperatur- und Konzentrationszunahme bis auf den am Beginn des Ausdampfprozesses erforderlichen Zustand an, tritt in den Ausdampfer 10 ein und kühlt sich unter steter Ausdampfung der flüchtigen Gemischkomponente 19 bis auf den vom dampfentladenen Neutralgasgesamtstrom vorgegebenen Partialdampfdruck ab. Die abgereicherte Flüssigkomponente 18 wird am kalten Ende des Ausdampfers 10 abgezogen. Der Produktstrom 18.1 wird zur Abkühlung durch den Gegenstromwärmetauscher 14 geleitet und dann nach außen abgeführt. Der Teilstrom 18.2 wird in den Absorber 13 zurückgeleitet und reichert sich darin unter steter Eigenerwärmung bis zur Konzentration des kalten Gemischzulaufs 17 an. Bis zu der vom rückangereicherten Teilstrom 18.2 vorgegebenen Sättigungstemperatur muß der aus dem Kondensator 11 kommende, rekuperativ vorgewärmte Gemischzulauf 17 mit Heizwärme der externen Heizquelle 15 nachgeheizt werden, damit der Gemischgesamtstrom 20 am Ende des Resorbers 12 den Ausdampfanfangszustand erreicht.

Während mit dem Rückverflüssigungsprozeß im Resorber 12 der überschüssige Dampf des oberen Partialdampfdruckbereichs aus dem Ausdampfer 10 abgesaugt wird, wird mit dem Rückverflüssigungsprozeß im Absorber 13 der überschüssige Dampf des unteren Partialdampfdruckbereichs abgesaugt. Am Kopf des Ausdampfers 10 strömt bei idealen Verhältnissen eine nahezu neutralgasfreie reine Dampfkomponente 19 in den Kondensator 11 über und wird unter rekuperativer Erwärmung des als Kühlmittel dienenden Gemischzulaufs 17 verflüssigt.

Die verflüssigte Dampfkomponente 19 wird als Produktstrom aus dem Kondensator 11 abgezogen und vor ihrem Austritt zur Unterkühlung ebenfalls durch den Gegenstromwärmetauscher 14 geleitet. Die Produktströme 18.1 und 19 verlassen die Trennapparatur mit einer nur wenig höheren Temperatur als der Eintrittstemperatur des kalten Gemischzulaufs 17.

Der Gesamtwärmetauscher 14 läßt sich durch einen Trick beim Anfahren des Trennverfahrens substituieren. Wird der rezyklierte Lösungsmittelteilstrom 18.2 beim Starten kälter in den Absorber 13 eingeleitet als der Gemischzulauf 17, so fixiert die Temperatur des rezyklierten Lösungsmittelteilstrom die untere Endtemperatur des Ausdampfprozesses für den folgenden stationären Betriebsfall. Diese Endtemperatur kann nun beim Starten erniedrigt werden, sodaß der Produktabstrom des Lösungsmittels 18.2 um den Betrag des Trennarbeitsaufwands kälter aus der Anlage austritt als der Gemischzulauf in die Anlage eintritt. Auf diese Weise läßt sich der erforderliche Trennarbeitsaufwand aus der Unterkühlung des Produktablaufs gewinnen.

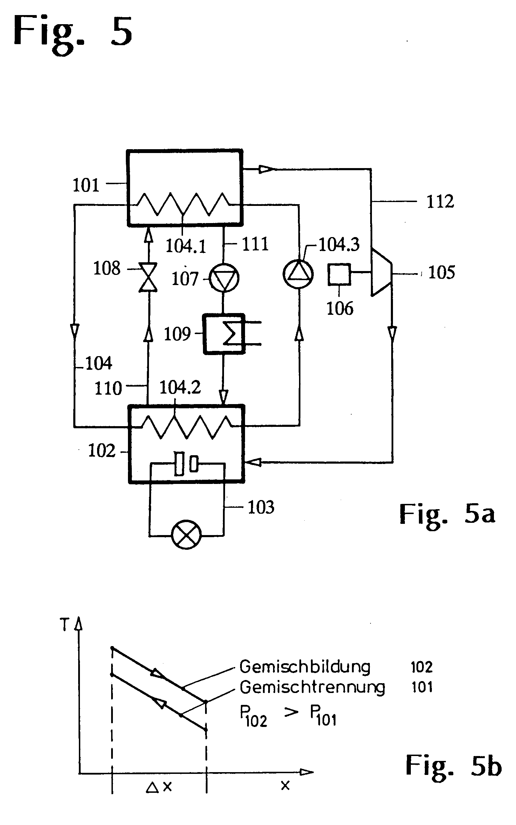

Fig. 5a zeigt das Verfahrensfließbild eines thermoelektrochemischen Energiewandlers mit interner Abwärmerückkoppelungseinrichtung, realisiert mit einer mechanischen Verdichtung der separierten Gemischkomponenten und einem Wärmeübertragungskreislauf. Gemäß Fig. 5b nimmt beim isobaren Ausdampfen der flüchtigen Gemischkomponente die Sättigungstemperatur des sich zur Flüssigkomponente abreichernden Gemisches stetig zu und zwar von der Sättigungstemperatur des Ausgangsgemisches bis zur Sättigungstemperatur der Flüssigkomponente. Die gleichfalls isobare absorptive Rekombination des Gemisches aus der Flüssigkomponente und der Dampfkomponente findet dagegen bei einem geringfügig höheren Sättigungsdruck statt, so daß die Sättigungstemperaturen der Gemischbildung gerade um soviel höher sind, daß die entropiebehaftete Abwärme des Rekombinationsprozesses mit Hilfe des Wärmeübertragungskreislaufs wieder dem Ausdampfprozeß zugeführt wird.

Der Energiewandler gemäß Fig. 5a enthält einen Ausdampfer 101, einen zur galvanischen Konzentrationszelle ausgebildeten Absorber 102, deren elektrischer Kreislauf 103 über einen äußeren Verbraucher geschlossen ist, einen Wärmeübertragungskreislauf 104, einen Dampfverdichter 105/106, eine Flüssigkomponentenpumpe 107, ein Druckreduzierventil 108 und eine externe Heizquelle 109.

Der abwärmeaufnehmende Wärmetauscher 104.2 des Kreislaufs 104 ist im Absorber 102 angeordnet, der wärmeabgebende Wärmetauscher 104.1 im Ausdampfer 101. Die Pumpe 104.3 sorgt für den Umlauf des Wärmeübertragungsmittels im Kreislauf 104. Der Stoffkreislauf des Energiewandlers ist folgender:

Das vom Absorber 102 kommende Flüssigkeitsgemisch 110 wird vor Eintritt in den Ausdampfer 101 im Entspannungsventil 108 auf den im Ausdampfer 101 herrschenden Sättigungsdruck abgesenkt und im Ausdampfer 101 bei entsprechend geringeren Temperaturen in die elektrochemisch reaktiven Komponenten - die Flüssigkomponente 111 und die Dampfkomponente 112 - zerlegt. Während die Flüssigkomponente 111 mittels der Gemischpumpe 107 wieder auf den höheren Sättigungsdruck des absorptiven Rekombinationsprozesses angehoben und in den Absorber 102 eingeleitet wird, wird die Dampfkomponente 112 im Verdichter 105 auf diesen Druck verdichtet und dann ebenfalls in den Absorber 102 eingeleitet.

Im Absorber 102 wird die Dampfkomponente 112 in der Flüssigkeitskomponente 111 unter Abgabe von Nutzarbeit und Abwärme bei höheren Temperaturen absorbiert. Die elektrische Nutzarbeit wird über den Stromkreislauf 103 aus dem Absorber 102 abgeführt und die Abwärme über den Wärmeübertragungskreislauf 104 dem Austreiber 101 wieder zugeführt.

Die externe Heizquelle 109 beheizt zum Beispiel die dem Absorber 102 zuzuführende Flüssigkomponente 111, da mit dem Gemischstrom 110 bereits eine ausreichende Wärmemenge auf direktem Wege dem Ausdampfprozeß zufließt.

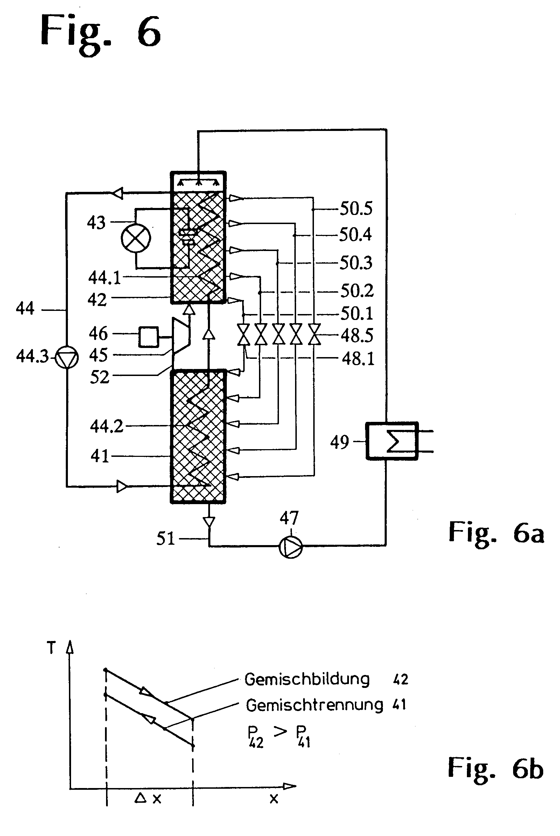

Fig.6a zeigt das Verfahrensfließbild eines thermoelektrochemischen Energiewandlers, dessen Arbeitsgemisch sich in einem ergänzenden Rektifizierprozeß in die erforderlichen reinen Gemischkomponenten zerlegen läßt. Mittels der Druckerhöhung des sorptiven Gemischbildungsprozesses läßt sich die entropiebehaftete Abwärme des Kreislaufs ebenfalls mit einem Wärmeübertragungskreislauf dem Ausdampfprozeß wieder zuführen.

Gemäß Fig. 6b steigt die Sättigungstemperatur des zur Flüssigkomponente verarmenden Gemisches bei der Gemischausdampfung stetig an, während sie bei der Rekombination des Gemisches, auf höherem Temperaturniveau, mit der Gemischanreicherung abnimmt. Das Konzentrationsintervall $\Delta X$, das hierbei von einem Gemisch mit einer flüchtigen Dampfgemischkomponente in einem Kreislauf durchlaufen werden kann, ist durch den Rektifizierprozeß größer als bei reinen Ausdampfprozessen.

Der Energiewandler, gemäß Fig. 6a, enthält einen Ausdampfer 41, einen zur galvanischen Konzentrationszelle ausgebildeten Absorber 42, deren elektrischer Kreislauf 43 über einen äußeren Verbraucher geschlossen ist, einen Wärmeübertragungskreislauf 44, einen elektrisch angetriebenen Dampfverdichter 45/46, eine Gemischpumpe 47, eine Druckreduziereinrichtung 48 und eine Heizquelle 49. Der abwärmeaufnehmende Wärmetauscher 44.1 des Wärmeübertragungskreislaufs 44 ist im Absorber 42 angeordnet, der wärmeabgebende Wärmetauscher 44.2 im Ausdampfer 41. Die Pumpe 44.3 sorgt für den Umlauf des Wärmeübertragungsmittels im Kreislauf 44.

Der Sättigungsdruckunterschied zwischen dem Ausdampfer 41 (geringerer Druck) und dem Absorber 42 (höherer Druck) wird seitens der Dampfkomponente 52 mit dem Verdichter 45/46 überbrückt und seitens der Flüssigkomponente 51 mit der Gemischpumpe 47. Über die Druckreduziereinrichtung 48.1 bis 48.5 werden mehrere teilangereicherte Gemischmengenströme 50.1 bis 50.5 aus dem Absorber 42 abgezweigt , auf das Sättigungsdruckniveau des Ausdampfers 41 entlastet und an temperatur- und konzentrationsgleichen Orten in den Ausdampfer 41 eingeleitet. Über die Heizeinrichtung 49 wird beispielsweise wieder der Gesamtstrom der Flüssigkomponente 51 beheizt, da dem Ausdampfer 41, über die Gemischteilströme 50.1 bis 50.5 eine ausreichende Wärmemenge auf direktem Wege zufließt.

Da in dieser Anordnung der Druckunterschied zwischen dem Absorber 42 und dem Ausdampfer 41 sehr gering ist, kann es erforderlich werden, daß die aus dem Ausdampfer 41 abzuführende Dampfkomponente 52 im Absorber auf rekuperativem Wege vorgeheizt und erst danach in der Flüssigkomponente sorptiv verflüssigt wird.

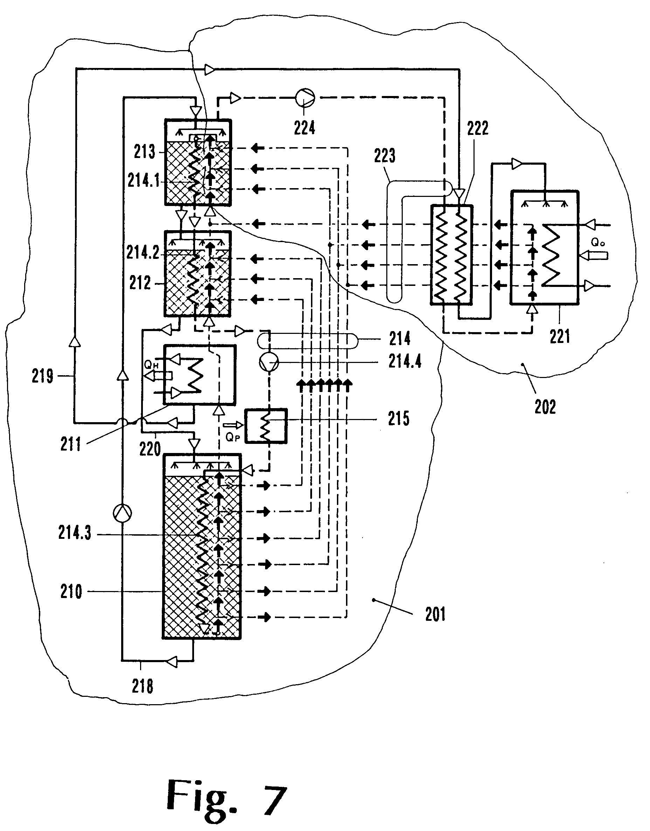

Aufbau und Funktionsweise des Wärmetransformators werden am Beispiel der Fig. 7 erläutert. Der Wärmetransformator besteht aus einem Gemischtrennteil 201, welcher im Aufbau weitgehend dem Verfahren zur Trennung sorptiver Gemische entspricht. Produktablaufseitig ist dem Gemischtrennteil 201 ein Maiuri-Kälteteil 202 gegengeschaltet.

Der Systemgesamtdruck ist im Gemischtrennteil 201 und im Maiuri-Kälteteil 202 derselbe. Deshalb können der Absorber des Trennteils 201 und der Absorber des Maiuri-Kälteteils 202 zu einem Absorptionsapparat 213 zusammengefaßt werden. Dieser Absorber 213 wird mit der aus dem Ausdampfer 210 ablaufenden Flüssigkomponente 218 versorgt. Die Flüssigkomponente 218 reichert sich im Absorber 213 bis zu dem vom Maiuri-Verdampfer 221 vorgegebenen Partialdampfdruck mit der Dampfkomponente 219 an. Das Gemisch strömt in den Resorber 212 ein und reichert sich hier unter weiterer Dampfaufnahme bis zu dem am Beginn des Ausdampfprozesses vorliegenden Gemischzustand 220 an.

Den Ausdampfer 210 verläßt ein nahezu neutralgasfreier Dampf 219. Dieser strömt zur Verflüssigung in den Kondensator 211. Die verflüssigte Dampfkomponente 219 wird aus dem Kondensator 211 abgezogen, über den Gaswärmetauscher 222 geführt und in den Maiuri-Verdampfer 221 eingeleitet, wo sie erneut verdampft und über den Neutralgasumlauf 223 des Maiuri-Kälteteils 202 wieder in den Absorber 213 gelangt.

Der Ventilator 214.4 sorgt für den mengenangepaßten Neutralgasumlauf im Gemischtrennteil 201 und der Ventilator 224 für den Neutralgasumlauf im Maiuri-Kälteteil 202. Die aus dem Ausdampfer 210 und aus dem Maiuri-Verdampfer 221 im selben Partialdampfdruckintervall abzuführenden Neutralgas-Dampfgemischteilströme sowie der partiell dampfabgereicherte Neutralgasabstrom des Resorbers 212 wechseln zu temperatur- und konzentrationsgleichen (zustandsgleichen) Orten in den Absorber 213. Die Neutralgas-Dampfgemischteilströme des darüber befindlichen Partialdampfdruckbereichs wechseln aus dem Ausdampfer 210 zu temperatur- und konzentrationsgleichen (zustandsgleichen) Orten in den Resorber 212.

Die externe Heizquelle 215 beheizt den im Absorber 213 und im Resorber 212 in den Wärmeaustauscheinrichtungen 214.1 und 214.2 rekuperativ aufgeheizten dampfabgereicherten Neutralgasgesamtstrom 214. Dieser Neutralgasgesamtstrom 214 gibt seine Wärme über die Wärmeaustauscheinrichtung 214.3 an den im Ausdampfer 210 ausdampfenden Gemischstrom 220 ab. Der Kondensator 211 des Gemischtrennteils 201 wird bei Nutztemperaturen oberhalb des Umgebungsniveaus mit einem externen Kühlmittel gekühlt und der Verdampfer 221 des Maiuri-Kälteteils 202 bei Temperaturen unterhalb des Umgebungsniveaus mit einem externen Fluidstrom beheizt.

## Patentansprüche

1. Thermisches Verfahren mit Neutralgasumlauf zum Trennen von sorptiv wirkenden Flüssigkeitsgemischen durch Kombination einer in einem Ausdampfer (10) in Anwesenheit eines dampfspeichernden Neutralgases (16) stattfindenden Gemischausdampfung mit einer in einem Kondensator (11) stattfindenden partiellen kondensativen Rückverflüssigung der ausgedampften Gemischkomponente (19), einer in einem Resorber (12) stattfindenden partiellen resorptiven Rückverflüssigung des im Neutralgas (16) enthaltenen Restdampfes im Gemischzulauf (17) und einer in einem Absorber (13) stattfindenden absorptiven Rückverflüssigung des nach der Resorption noch im Neutralgas (16) verbliebenen Restdampfes in einem rezyklierten Teilstrom (18.2) der Flüssigkomponente (18) des zerlegten Gemisches, wobei der Ausdampfer (10), der Resorber (12) und der Absorber (13) in entgegengesetzter Strömungsrichtung zu den jeweiligen Flüssigkeiten (20, 17, 18.2) von dem dampfspeichernden Neutralgas (16) mit linearisierter Temperatur-Enthalpie-Kennlinie durchströmt sind und der Mengenstrom des sich dampfanreichernden Neutralgases (16) im Ausdampfer (10) gestuft abnimmt und des sich dampfabreichernden Neutralgases (16) im Resorber (12) beginnend und im Absorber (13) endend gestuft zunimmt, indem einzelne mit Dampf gesättigte Neutralgasteilströme mit gestuft zunehmenden Dampfgehalten aus dem Ausdampfer (10) abgezweigt und zu temperatur- und partialdampfdruckgleichen Orten in den Resorber (12) und in den Absorber (13) übergeleitet sind und der in den Ausdampfer (10) zurückgeleitete dampfabgereicherte Neutralgasgesamtstrom (16) dem ausdampfenden Gemisch (20) wieder entgegengeführt ist, wobei der kalte Gemischzulauf (17) als abwärmeaufnehmendes, rekuperatives Kühlmittel durch einen Gegenstromwärmetauscher (14) und den Kondensator (11) geführt ist, der rezyklierte Teilstrom (18.2) der Flüssigkomponente (18) des zerlegten Gemisches als wärme- und dampfsorbierende Flüssigkeit durch den Absorber (13) und anschließend zusammen mit dem konzentrationsgleichen, rekuperativ vorgeheizten Gemischzulauf (17) als wärme- und dampfsorbierende Flüssigkeit durch den Resorber (12) geführt ist und der Gemischablauf (20) des Resorbers (12) in den Ausdampfer (10) eingeleitet ist und eine Heizquelle (15) diesen Gemischablauf (20) beheizt, wobei der verflüssigte Dampf (19) und der unverdampfte Teil (18.1) des Gemisches am kalten Ende des Gegenstromwärmetauschers (14) abgeführt sind.

2. Verfahren nach Anspruch 1 dadurch gekennzeichnet, daß der kalte dampfabgereicherte Neutralgasgesamtstrom (16) seinen Wärmeverschleppungen entgegenwirkend, unter Wärmeaufnahme eine in den sorptiven Verflüssigern (12) und (13) angeordnete erste Wärmeaustauscheinrichtung (16.1 und 16.2) im Gleichstrom mit dem Flüssigkeitsstrom durchströmt und anschließend unter Wärmeabgabe, ebenfalls im Gleichstrom mit dem Flüssigkeitsstrom eine im Ausdampfer (10) angeordnete zweite Wärmeaustauscheinrichtung (16.3).

3. Verfahren nach einem der Ansprüche 1 oder 2 dadurch gekennzeichnet, daß dem Gemischtrennteil (201) ein Maiuri-Kälteteil (202) gegengeschaltet ist, wobei entweder Teilströme der Produktabläufe (218) und (219) des Gemischtrennteils (201) oder die Gesamtströme der Produktabläufe (218) und (219) dem Maiuri-Kälteteil (202) zugeführt werden und die Temperatur-Enthalpie-Kennlinien des im Maiuri-Kälteteil (202) umlaufenden Neutralgases (223) im Maiuri-Verdampfer (221) und im Maiuri-Absorber (213) in gleicher Weise linearisiert sind wie im Gemischtrennteil (201).

4. Verfahren nach Anspruch 3 dadurch gekennzeichnet, daß dem Neutralgasumlauf (223) des Maiuri-Kälteteils (202) ein Gasgegenstromwärmetauscher (222) zugeordnet ist, der auf der wärmeaufnehmenden Seite von den dampfbeladenen Neutralgasteilströmen (223) des Verdampfers (221) und auf der wärmeabgebenden Seite von dem dampfentladenen Neutralgasgesamtstrom (223) des Absorbers (213) und dem Kondensatzulauf (219) des Verdampfers (221) beaufschlagt ist.

5. Verfahren zum thermischen Trennen und elektrochemischen Rekombinieren von sorptiv wirkenden Flüssigkeitsgemischen durch Kombination einer in einem Ausdampfer (101) stattfindenden Gemischausdampfung mit einer in einem Absorber (102) stattfindenden absorptiven Rückverflüssigung der ausgetriebenen Dampfkomponente (112) in der Flüssigkomponente (111) des zerlegten Gemisches, wobei das sorptiv wirkende Flüssigkeitsgemisch (110) im Ausdampfer (101) mittels Wärmezufuhr aus einer Heizquelle in die Flüssigkomponente (111) und die Dampfkomponente (112) zerlegt, beide Komponenten in getrennten Leitungen dem Absorber (102) zugeleitet und darin zum Ausgangsgemisch (110) rekombiniert werden, das rekombinierte Flüssigkeitsgemisch (110) wieder dem Ausdampfer (101) zugeführt ist und der Absorber (102) als galvanische Konzentrationszelle ausgestaltet ist und diese mit einem äußeren Verbraucher einen elektrischen Kreislauf (103) bildet, die Konzentrationszelle (102) den entropiefreien chemischen Nutzarbeitsanteil des Rekombinationsprozesses in elektrische Energie umwandelt und diese an den äußeren Verbraucher abführt, eine rekuperativ wirkende Wärmeübertragungseinrichtung (104) den entropiebehafteten reversiblen Abwärmeanteil des Rekombinationsprozesses vom Absorber (102) zum Ausdampfer (101) zurückführt, wobei der Ausdampfer (101) und der Absorber (102) von dem Flüssigkeitsgemisch und einem dampfspeichernden Neutralgas durchströmt sind und das umlaufende Neutralgas stofflichen Kontakt zu dem jeweiligen Flüssigkeitsstrom hält wobei sein Mengenstrom bei der Dampfanreicherung im Ausdampfer (101) gestuft abnimmt und bei der Dampfabreicherung im Absorber (102) entsprechend gestuft zunimmt, indem einzelne dampfgesättigte Neutralgasteilströme mit gestuft zunehmenden Dampfgehalten aus dem Ausdampfer (101) abgezweigt und zu temperatur- und partialdampfdruckgleichen Orten in den Absorber (102) übergeleitet sind und der dampfabgereicherte Neutralgasgesamtstrom dem Ausdampfer (101) wieder zugeführt ist.

6. Verfahren nach einem der Ansprüche 1 bis 5 dadurch gekennzeichnet, daß die kondensativ zu verflüssigende Dampfkomponente zuvor einem Dephlegmationsprozeß unterzogen wird, wobei die zu dephlegmierende Dampfkomponente mit einem Teilstrom des kalten, dampfabgereicherten Neutralgasgesamtstroms gekühlt wird, der dephlegmierte Dampf in den Verflüssiger eingeleitet ist und das Dephlegmat über Kopf in den Ausdampfer zurückströmt.

7. Thermisches Verfahren mit Neutralgasumlauf zum Trennen oder Aufkonzentrieren von nicht- oder nur schwach-sorptiv wirkenden Flüssigkeitsgemischen durch Kombination einer in einem Ausdampfer (1) in Anwesenheit eines dampfspeichernden Neutralgases (5) stattfindenden Gemischausdampfung mit einer in einem Kondensator (2) stattfindenden kondensativen Rückverflüssigung der im Neutralgas (5) gespeicherten ausgedampften Gemisch komponente, wobei der Ausdampfer (1) und der Kondensator (2) von dem dampfspeichernden Neutralgas (5) mit linearisierter Temperatur-Enthalpie-Kennlinie durchströmt sind und der den jeweiligen Flüssigkeitsströmen (6, 9) entgegengeführte Neutralgasmengenstrom (5) im Ausdampfer (1) gestuft abnimmt und im Kondensator (2) gestuft zunimmt, indem einzelne mit Dampf gesättigte Neutralgasteilströme mit gestuft zunehmenden Dampfgehalten aus dem Ausdampfer (1) abgezweigt und in den Kondensator (2) übergeleitet sind und der dampfabgereicherte Neutralgasgesamtmengenstrom (5) in den Ausdampfer (1) zurückgeleitet und dem ausdampfenden Gemisch (6) wieder entgegengeführt ist dadurch gekennzeichnet, daß der kalte Gemischzulauf (6) als abwärmeaufnehmendes Kühlmittel entweder im Gegenstrom zum dampfabzureichernden Neutralgas durch eine im Kondensator (2) angeordnete Wärmeaustauscheinrichtung geführt ist oder im Gegenstrom zu einem die Verflüssigungsabwärme und die zuverflüssigende Komponente (7) aufnehmenden Flüssigkeitsstrom (9) der ausdampfenden Gemischkomponente (7) durch eine extern angeordnete Wärmeaustauscheinrichtung (3) und dieser Flüssigkeitsstrom (9) dann in einem Kreislauf im stofflichen Kontakt mit dem dampfgesättigten Neutralgas (5) durch den Kondensator (2) und ohne stofflichen Kontakt zum Gemischzulauf (6) durch die externe Wärmeaustauscheinrichtung (3) geführt ist, daß der rekuperativ vorgewärmte Gemischzulauf (6) oder das dampfabgereicherte Neutralgas von einer Heizquelle (4) beheizt ist, daß die aus dem Ausdampfer (1) in den Kondensator (2) übergeleiteten Neutralgasteilströme dampfgesättigt sind und ohne gegenseitigen Wärmeaustausch zu temperatur- und partialdampfdruckgleichen Orten in den Kondensator (2) geleitet sind und daß die verflüssigte Dampfkomponente (7) am kalten Ende des Kondensators (2) und die aufkonzentrierte Flüssigkomponente (8) des zerlegten Gemisches (6) am kalten Ende des Ausdampfers (1) abgeleitet sind.

8. Verfahren nach Anspruch 7 dadurch gekennzeichnet, daß der kalte dampfabgereicherte Neutralgasgesamtstrom (5) seinen Wärmeverschleppungen entgegenwirkend, unter Wärmeaufnahme eine im Kondensator (2) angeordnete erste Wärmeaustauscheinrichtung (5.1) im Gleichstrom mit dem Flüssigkeitsstrom durchströmt und anschließend, ebenfalls im Gleichstrom mit dem Flüssigkeitsstrom, unter Wärmeabgabe eine im Ausdampfer (1) angeordnete zweite Wärmeaustauscheinrichtung (5.2).

## Claims

1. Thermal process featuring neutral gas circulation designed to separate sorptive liquid mixtures, combining evaporation of the mixture in an evaporator (10) in the presence of a vapour-bearing neutral gas (16) with partial recondensation in a condenser (11) of the evaporated component of the mixture (19), partial recondensation in a resorber (12) of the residual vapour carried by the neutral gas (16) in the inflowing mixture (17), and recondensation in an absorber (13) of the residual vapour remaining in the neutral gas (16) after the resorption process in a recycled portion (18.2) of the liquid component (18) of the separated mixture, whereby the vapour-bearing neutral gas (16) flows through the evaporator (10), the resorber (12) and the absorber (13) with a linearised temperature-enthalpy characteristic in the opposite direction to the associated liquids (20, 17, 18.2) and the mass flow of the neutral gas (16) progressively decreases as it takes up vapour in the evaporator (10) and progressively increases as it sheds vapour beginning in the resorber (12) and ending in the absorber (13), with individual vapour-saturated portions of the neutral gas flow being extracted from the evaporator (10) with progressively increasing vapour content levels and passed to points in the resorber (12) and the absorber (13) which are at the same temperature and partial vapour pressure and with the total flow of vapour-depleted neutral gas (16) which has been routed back into the evaporator (10) being brought back into contact with the evaporating mixture (20), whereby the cold inflowing mixture (17) is routed through a counterflow heat exchanger (14) and the condenser (11) as a recuperative cooling agent to carry off waste heat, the recycled portion (18.2) of the liquid component (18) of the separated mixture is routed first through the absorber (13) as a liquid sorbent for heat and vapour and then, together with the recuperatively preheated inflowing mixture, through the resorber (12) as a liquid sorbent for heat and vapour, and the outflowing mixture (20) leaving the resorber (12) is fed into the evaporator (10) and this outflowing mixture (20) is heated by a heat source (15), whereby the condensed vapour and the unevaporated portion (18.1) of the mixture are drawn off at the cold end of the counterflow heat exchanger (14).

2. Process as in Claim 1 characterised in that the cold vapour-depleted total flow of neutral gas (16), counteracting its heat entrainment functions, flows in parallel with the liquid flow through a first heat exchanger unit (16.1, 16.2) installed in the sorptive condensers (12, 13), where it takes up heat, and then, likewise in parallel with the liquid flow, through a second heat exchanger unit (16.3) installed in the evaporator (10), where it gives off heat.

3. Process as in Claim 1 or Claim 2 characterised in that there is a Maiuri refrigeration part (202) added to the mixture separation unit (201), whereby either portions of the product flows (218, 219) leaving the mixture separation unit (201) or the total outflowing product flows (218, 219) are delivered to the Maiuri refrigeration part (202) and the temperature-enthalpy characteristics of the neutral gas (223) circulating in the Maiuri refrigeration part (202) are linearised in the Maiuri evaporator (221) and the Maiuri absorber (213) in the same way as in the mixture separation unit (201).

4. Process as in Claim 3 characterised in that the circulating flow of neutral gas (223) in the Maiuri refrigeration part (202) is connected to a gas counterflow heat exchanger (222) which on the heat-receiving side is fed the vapour-laden partial flows of neutral gas (223) from the evaporator (221) and on the heat-giving side is fed the vapour-depleted total flow of neutral gas (223) from the absorber (213) and the stream of condensate (219) which is flowing towards the evaporator (221).

5. Process for thermally separating and electrochemically recombining sorptive liquid mixtures, combining evaporation of the mixture in an evaporator (101) with absorptive recondensation in an absorber (102) of the expelled vapour component (112) in the liquid component (111) of the separated mixture, whereby the sorptive liquid mixture (110) is separated into the liquid component (111) and the vapour component (112) in the evaporator (101) by the application of heat from an external heat source, the two components are separately routed to the absorber (102) and there recombined to reform the original mixture (110), the recombined liquid mixture (110) is returned to the evaporator (101), and the absorber (102) is in the form of a galvanic concentration cell which combines with an external load to form an electrical circuit (103), the concentration cell (102) converts the entropy-free useful chemical work constituent of the recombination process to electrical energy, which it feeds to the external load, and a recuperative heat exchanger unit (104) returns the entropy-affected reversible waste heat constituent of the recombination process from the absorber (102) to the evaporator (101), whereby the liquid mixture and a vapour-bearing neutral gas flow through the evaporator (101) and the absorber (102) and the circulating neutral gas is in physical contact with the associated liquid flow, with its mass flow progressively decreasing during vapour uptake in the evaporator (101) and correspondingly progressively increasing during vapour shedding in the absorber (102) in that individual vapour-saturated portions of the neutral gas flow are extracted from the evaporator (101) with progressively increasing vapour content levels and passed to points in the absorber (102) which are at the same temperature and partial vapour pressure and that the total flow of vapour-depleted neutral gas is routed back into the evaporator (101).

6. Process as in any of Claims 1 to 5 characterised in that the vapour component which is to be returned to the liquid state by condensation is first subjected to a partial condensation (dephlegmation) process, where the vapour component being partially condensed is cooled by a portion of the cold, vapour-depleted total flow of neutral gas, the partially condensed vapour is fed into the condenser and the partial condensate returns to the evaporator from above.

7. Thermal process featuring neutral gas circulation designed to separate or to increase the concentration of non-sorptive or weakly sorptive liquid mixtures, combining evaporation of the mixture in an evaporator (1) in the presence of a vapour-bearing neutral gas (5) with recondensation in a condenser (2) of the evaporated mixture component (19) which is borne by the neutral gas (5), whereby the vapour-bearing neutral gas (5) flows through the evaporator (1) and the condenser (2) with a linearised temperature-enthalpy characteristic and the mass flow of the neutral gas (5) brought into contact with the associated liquid flows (6, 9) progressively decreases in the evaporator (1) and progressively increases in the condenser (2), with individual vapour-saturated portions of the neutral gas flow being extracted from the evaporator (1) with progressively increasing vapour content levels and passed to the condenser and with the total mass flow of vapour-depleted neutral gas (5) being routed back into the evaporator (1) and brought back into contact with the evaporating mixture (6), characterised in that the cold inflowing mixture (6), acting as a cooling agent to carry off waste heat, is routed either through a heat exchanger unit located in the condenser (2) in the opposite direction to the neutral gas which is to be stripped of vapour or through an external heat exchanger unit (3) in the opposite direction to a liquid flow (9) of the evaporating liquid component (7) which takes up the waste heat of condensation and the component being condensed (7), and this liquid flow (9) is then routed in a circuit through the condenser (2) in physical contact with the vapour-saturated neutral gas (5) and through the external heat exchanger unit (3) without physical contact with the inflowing mixture, that the recuperatively preheated inflowing mixture (6) or the vapour-depleted neutral gas is heated by a heat source (4), that the partial neutral gas flows transferred from the evaporator (1) to the condenser (2) are vapour-saturated and are passed without reciprocal heat exchange to points in the condenser (2) which are at the same temperature and partial vapourpressure, and that the condensed vapour component (7) is drawn off at the cold end of the condenser and the concentrated liquid component (8) of the separated mixture is drawn off at the cold end of the evaporator (1).

8. Process as in Claim 7 characterised in that the cold vapour-depleted total flow of neutral gas (5), counteracting its heat entrainment functions, flows in parallel with the liquid flow through a first heat exchanger unit (5.1) installed in the condenser (2), where it takes up heat, and then, likewise in parallel with the liquid flow, through a second heat exchanger unit (5.2) installed in the evaporator (1), where it gives off heat.

**Revendications**

1. Le présent procédé thermique à circulation de gaz neutre permet la séparation de mélanges de liquides actifs et rétenteurs d'humidité. Il se réalise par la combinaison entre l'évaporation du mélange dans un évaporateur (10) en présence d'un gaz neutre (16) qui accumule la vapeur, et la partielle refluidification par condensation dans un condensateur (11) des composants évaporés du mélange (19), et par la combinaison entre la refluidification partielle par résorption dans un résorbeur (12) du reste de vapeur contenue dans le gaz neutre (16) au niveau de l'alimentation du mélange (17) et la refluidification par absorption dans un absorbeur (13) du reste de vapeur demeurée dans le gaz neutre (16), après la résorption sous courant partiel recyclé (18.2) des composants liquides (18) du mélange décomposé. Le gaz neutre (16) qui accumule la vapeur, traverse l'évaporateur (10), le résorbeur (12) et l'absorbeur (13) dans le sens opposé d'écoulement de chacun des liquides (20, 17, 18.2), avec une courbe de température enthalpique linéarisée. En même temps, le flux massique de gaz neutre (16) enrichi en vapeur diminue par paliers dans l'évaporateur (10), et le flux massique de gaz neutre (16) appauvri en vapeur augmente par paliers en commençant par le résorbeur (12) et en finissant par l'absorbeur (13), tandis que chacun des courants partiels de gaz neutre, saturés en vapeur, est dévié de l'évaporateur (10) et transféré en des lieux égaux en température et en pression partielle de vapeur dans le résorbeur (12) et dans l'absorbeur (13). Le courant total de gaz neutre (16) appauvri en vapeur, ramené dans l'évaporateur (10), est conduit de nouveau au mélange qui s'évapore (20). L'alimentation (17) en mélange froid est considérée comme un refroidisseur par combustible qui absorbe la chaleur perdue. Elle est conduite à contre-courant dans un échangeur thermique (14) et dans le condensateur (11). Le courant partiel (18.2) recyclé des composants liquides (18) issus du mélange décomposé, considéré comme un liquide qui absorbe la chaleur et la vapeur, est conduit dans l'absorbeur (13). Il est ensuite conduit dans le résorbeur (12) avec l'alimentation du mélange (17), de même concentration et préchauffée par combustible. Cette alimentation est considérée comme un liquide absorbant la chaleur et la vapeur. L'évaporation du mélange (20) issu du résorbeur (12) est conduite dans l'évaporateur (10) et une source de chaleur (15) chauffe cette évaporation de mélange (20); à ce moment là, la vapeur fluidifiée (19) et la partie non évaporée (18.1) du mélange sont emmenées à contre-courant à l'extrémité froide de l'échangeur thermique (14).

2. D'après la spécification 1, le procédé est caractérisé par le fait que le courant froid total de gaz neutre (16), appauvri en vapeur et qui s'oppose à ses entrainements de chaleur, traverse pendant l'absorption de chaleur une première installation d'échangeur thermique (16.1 et 16.2) placée au niveau des condenseurs qui retiennent l'humidité (12) et (13). Ce mouvement s'effectue dans le même sens que celui des liquides. Ensuite ce courant froid total de gaz neutre traverse pendant l'émission de chaleur, également dans le même sens que celui des liquides, une deuxième installation d'échangeur thermique (16.3) placée dans l'évaporateur (10).

3. D'après l'une des spécifications 1 ou 2, le procédé est caractérisé par le fait qu'une pièce de refroidissement-Maiuri (202) est montée en opposition à la pièce de séparation du mélange (201). Ou bien les courants partiels d'écoulement de produits (218) et (219) de la pièce de séparation du mélange (201) passent jusqu'à la pièce de refroidissement-Maiuri (202), ou bien c'est l'ensemble des courants d'écoulement des produits (218) et (219) qui passent jusqu'à cette pièce de refroidissement-Maiuri (202). Les courbes de température enthalpiques du gaz neutre (223), qui circule dans la pièce de refroidissement Maiuri (202), sont linéarisées dans l'évaporateur-Maiuri (221) et dans l'absorbeur-Maiuri (213), de la même façon que dans la pièce de séparation de mélange (201).

4. D'après la spécification 3, le procédé est caractérisé par le fait qu'un échangeur thermique de gaz à contre-courant (222) est coordonné à la circulation de gaz neutre (223) de la pièce de refroidissement-Maiuri (202). Cet échangeur est admis sur le côté de l'évaporateur (221) absorbant la chaleur des courants partiels de gaz neutre (223) et sur le côté de l'absorbeur (213) évacuant la chaleur du courant total de gaz neutre (223) libéré de vapeur, et enfin admis sur l'alimentation en produit de condensation (219) issu de l'évaporateur (221).

5. Le procédé de séparation thermique et de recombinaison électrochimique de mélanges de liquides actifs qui accumulent l'humidité s'effectue par la combinaison entre une évaporation du mélange dans un évaporateur (101) et la refluidification par absorption dans un absorbeur (102) des éléments de vapeur qui se sont expulsés des composants liquides (111) du mélange décomposé. Le mélange de liquides actifs accumulant l'humidité (110) se décompose en éléments liquides (111) et en composants de vapeur (112) dans l'évaporateur (101) grâce à une entrée de chaleur issue d'une source de chaleur. Ces deux composants sont conduits à l'absorbeur (102) dans des conduites séparées et sont recombinés ici-même en mélange initial (110). Le mélange recombiné de liquides (110) est de nouveau conduit dans l'évaporateur (101), et l'absorbeur (102) est développé en cabine de concentration galvanique. Ceci forme avec un utilisateur extérieur un circuit électrique fermé (103). La cabine de concentration (102) transforme en énergie électrique la partie chimique de travail utile du procédé de recombinaison sans entropie, et celle-ci est évacuée pour les utilisateurs extérieurs. Une installation active de transmission de chaleur par combustion (104) ramène la partie réversible de chaleur perdue, atteinte d'entropie, lors du procédé de recombinaison, de l'absorbeur (102) à l'évaporateur (101). Le mélange de liquides et un gaz neutre qui accumule l'humidité traversent l'évaporateur (101) et l'absorbeur (102). Le gaz neutre en circulation maintient le contact matériel avec chaque courant de liquides. Le flux de masse se réduit alors par paliers lors de l'enrichissement en vapeur dans l'évaporateur (101) et augmente par paliers de la même façon lors de l'appauvrissement en vapeur dans l'absorbeur (102). Pendant ce temps, chaque courant partiel de gaz neutre, saturé en vapeur, est dévié de l'évaporateur (101) avec une teneur en vapeur croissante par paliers et ils passent dans des endroits égaux en température et en pression partielle de vapeur dans l'absorbeur (102). Le courant total de gaz neutre appauvri en vapeur est reconduit dans l'évaporateur (101).

6. D'après les spécifications de 1 à 5, le procédé est caractérisé par le fait que les composants de vapeur qui doivent être refluidifiés par condensation sont d'abord soumis à un procédé de déphlegmation. Le composant de vapeur à déphlegmer est refroidi par un courant partiel du courant total de gaz neutre appauvri en vapeur. La vapeur déphlegmée est conduite dans un condenseur et le déphlegmat passe de nouveau dans l'évaporateur par son sommet.

7. Le procédé thermique à circulation de gaz neutre pour séparer ou concentrer des mélanges de liquides actifs, non rétenteurs ou seulement faiblement rétenteurs d'humidité, s'effectue par la combinaison entre l'évaporation du mélange dans un évaporateur (1) en présence d'un gaz neutre qui accumule la vapeur (5) et la refluidification par condensation dans un condensateur (2) des composants du mélange évaporé. Ces composants sont latents dans le gaz neutre (5). Le gaz neutre qui retient la vapeur (5) traverse l'évaporateur (1) et le condensateur (2), avec une courbe de température enthalpique linéarisée. Le flux de masse de gaz neutre (5) conduit à contre-courant de chacun des flux de liquides, diminue par paliers dans l'évaporateur (1) et augmente par paliers dans le condensateur (2). Chaque courant partiel de gaz neutre saturé en vapeur est dévié de l'évaporateur (1) avec une teneur en vapeur augmentant par paliers. Chaque courant est conduit dans le condensateur (2) et le flux de masse total de gaz neutre (5) appauvri en vapeur est ramené dans l'évaporateur (1). Le courant partiel de gaz neutre est conduit à contre-courant du mélange qui s'évapore (6) et <u>est caractérisé par le fait</u> que l'alimentation en mélange froid (6), considérée comme un agent réfrigérant captant la chaleur perdue est conduite ou bien à contre-courant du gaz neutre enrichi en vapeur par une installation d'échange thermique placée dans le condensateur (2) ou bien à contre-courant des liquides (9) captant la chaleur perdue de la condensation et les composants à condenser (7). Ce courant de liquides (9) est issu des composants évaporés du mélange (7) par une installation d'échange thermique montée à l'extérieur (3). Ce courant de liquides (9) est reconduit ensuite dans un circuit fermé en contact matériel avec le gaz neutre saturé en vapeur (5) au travers du condensateur (2), et est reconduit sans contact matériel jusqu'à l'alimentation de mélange (6) à travers l'installation d'échange thermique (3). L'alimentation de mélange (6) préchauffée par combustion ou le gaz neutre appauvri en vapeur sont chauffés par une source de chaleur (4). Les courants parties de gaz neutre, déviés de l'évaporateur (1) vers le condensateur (2), sont saturés en vapeur et sont conduits sans échange thermique réciproque dans des endroits égaux en température et en pression partielle de vapeur dans le condensateur (2). Les composants de vapeur condensés (7) sont conduits à l'extrémité froide du condensateur (2) et les composants liquides évacués (8) du mélange décomposé (6) sont déversés vers l'extrémité froide de l'évaporateur (1).

8.  D'après la spécification 7, le procédé est caractérisé par le fait que le courant froid total de gaz neutre (5) appauvri en vapeur, s'oppose à ses entrainements de chaleur et traverse lors de l'absorption de chaleur une première installation d'échange thermique (5.1) placée dans le condensateur (2) avec le même courant que celui des liquides. Il traverse ensuite avec le même courant que celui des liquides lors de l'évacuation de chaleur une deuxième installation d'échange thermique (5.2) située dans l'évaporateur (1).

minimaler Heizwärmestrom
$|\triangle H_{Des.}| = |\triangle H_{Abs.}|$

## Desorber

T oder P = const.

Flüssigkomponente
(H2O)

Flüssigkeitsgemisch
(90 % H2O + 10 % NH3)

Dampfgemischkomponente
(NH3 + H2O)

## Absorber

T oder P = const.

Absorberkühlung

Einrichtung zur
Auskoppelung
der Nutzarbeit

Abwärmestrom: $\triangle(T \times s_{(T)})_A$
+
Nutzarbeitsstrom: $\triangle G_A$

Gibbs'sche Fundamentalgleichung

$$\triangle H_A = \triangle G_A + \triangle(T \times s_{(T)})_A$$

# Fig. 1

| $X_{LM}$ | m % | 0 NH3 |
|---|---|---|
| T | $^{\circ}$ C | 140 |
| P | bar | 3,62 |
| m | kg/s | 4,803 |
| H | kJ/s | - 73764,5 |
| T x s | kJ/s | - 15167,5 |
| G | kJ/s | - 58956,6 |

| $X_L$ | m % | 10 NH3 |
|---|---|---|
| T | $^{\circ}$ C | 114 |
| P | bar | 3,62 |
| m | kg/s | 5,803 |
| H | kJ/s | - 83071 |
| T x s | kJ/s | - 17997,1 |
| G | kJ/s | - 65074,8 |

Flüssigkeitsgemisch

**Absorber**

140 $^{\circ}$ C $\longrightarrow$ 114 $^{\circ}$ C

P = const.

Flüssigkomponente

Dampfgemischkomponente

| $T_A$ | $^{\circ}$ C | 140 - 114 |
|---|---|---|
| $\triangle H_A$ | kJ/s | - 2291,9 |
| $\triangle (T \times s(T))_A$ | kJ/s | - 1220,4 |
| $\triangle G_A$ | kJ/s | - 1072,8 |

| $X_D$ | m % | 58,03 NH3 |
|---|---|---|
| T | $^{\circ}$ C | 114 |
| P | bar | 3,62 |
| m | kg/s | 1,0 |
| H | kJ/s | - 7014,6 |
| T x s | kJ/s | - 1609,2 |
| G | kJ/s | - 5405,4 |

# Fig. 2a

| $X_{LM}$ | m % | 0 NH3 |
|---|---|---|
| T | °C | 114 |
| P | bar | 1,64 |
| m | kg/s | 4,803 |
| H | kJ/s | - 74364,8 |
| T x s | kJ/s | - 14775,8 |
| G | kJ/s | - 59589 |

| $X_L$ | m % | 10 NH3 |
|---|---|---|
| T | °C | 114 |
| P | bar | 3,62 |
| m | kg/s | 5,803 |
| H | kJ/s | - 83071 |
| T x s | kJ/s | - 17997,1 |
| G | kJ/s | - 65074,8 |

Flüssigkeitsgemisch

**Absorber**

P: 1,64 ⟶ 3,62 bar

T = const.

Flüssigkomponente

Dampfgemischkomponente

| $T_A$ | °C | 114 |
|---|---|---|
| $\triangle H_A$ | kJ/s | - 1691,6 |
| $T \times \triangle s_A$ | kJ/s | - 1612,1 |
| $\triangle G_A$ | kJ/s | - 80,4 |

| $X_D$ | m % | 58,03 NH3 |
|---|---|---|
| T | °C | 114 |
| P | bar | 3,62 |
| m | kg/s | 1,0 |
| H | kJ/s | - 7014,6 |
| T x s | kJ/s | - 1609,2 |
| G | kJ/s | - 5405,4 |

# Fig. 2b

# Fig. 3

# Fig. 4

# Fig. 5

Fig. 5a

Fig. 5b

# Fig. 6

43
44.1
44
42
46
44.3
45
52

44.2
41

51

50.5
50.4
50.3
50.2
50.1
48.5
48.1

49

47

Fig. 6a

T

Gemischbildung    42
Gemischtrennung  41

$P_{42} > P_{41}$

Δx        x

Fig. 6b

Fig. 7